(19) Europäisches Patentamt
European Patent Office
Office européen des brevets

(11) Publication number: **0 251 231 B1**

(12) **EUROPEAN PATENT SPECIFICATION**

(45) Date of publication of patent specification: **14.09.94**   (51) Int. Cl.⁵: **G02F 1/137**

(21) Application number: **87109191.4**

(22) Date of filing: **26.06.87**

(54) **Liquid crystal optical device and liquid crystal optical printer using the same.**

(30) Priority: **30.06.86 JP 153540/86**
**30.07.86 JP 179143/86**

(43) Date of publication of application:
**07.01.88 Bulletin 88/01**

(45) Publication of the grant of the patent:
**14.09.94 Bulletin 94/37**

(84) Designated Contracting States:
**DE FR GB**

(56) References cited:
**EP-A- 0 169 518**
**GB-A- 2 144 869**
**US-A- 4 589 732**
**US-A- 4 609 256**

**PHYSIK IN UNSERER ZEIT, Vol. 6, No. 3, 1975, M. KOBALE et al. "Flüssige Kristalle", pp. 66-77**

**A. CIFERRI et al. (editors) "Polymer Liquid Crystals", 1982, ACADEMIC PRESS, New York, pp. 309-327**

(73) Proprietor: **CASIO COMPUTER COMPANY LIMITED**
**6-1, 2-chome, Nishi-Shinjuku**
**Shinjuku-ku Tokyo 160 (JP)**

(72) Inventor: **Fujimura, Koh/Pat. Dept Dev. Div Hamura**
**R & D Center Casio Comp. Co. Ltd**
**3-2-1, Sakae-cho**
**Hamura-machi Nishitama-gun Tokyo 190-11 (JP)**
Inventor: **Higa, Masakatsu Pat. Dept Dev. Div Hamura**
**R & D Center Casio Comp. Co. Ltd**
**3-2-1, Sakae-cho**
**Hamura-machi Nishitama-gun Tokyo 190-11 (JP)**
Inventor: **Aoki, Hisashi Pat. Dept Dev. Div Hamura**
**R & D Center Casio Comp. Co. Ltd**
**3-2-1, Sakae-cho**
**Hamura-machi Nishitama-gun Tokyo 190-11 (JP)**

(74) Representative: **Patentanwälte Grünecker, Kinkeldey, Stockmair & Partner**
**Maximilianstrasse 58**
**D-80538 München (DE)**

## Description

The present invention relates to a liquid crystal optical device accords to the preamble of claim 1 for controlling a light-transmission state or a light-shielding state, by means of photo-electronic effect of liquid crystal material, and a liquid crystal optical printer using the liquid crystal optical device. Such a device is known from US-A-4 589 732 ( = EP-A-0 083 253).

In recent times, a liquid crystal optical device for controlling a light-transmission state or a light-shielding state, has come to be increasingly used in television sets, computer terminals, office equipment, and the like. The liquid crystal optical device is applied to a matrix display device or an optical prining head of an electro-photographic printer used as part of the above mentioned devices. The liquid crystal device controls the light-transmission (ON) state and the light-shielding (OFF) state of microshutters, so that an image and/or character is displayed, or a pattern such-as an image and/or character is exposed onto a photo-sensitive body. These microshutters are independently ON/OFF-controlled. These microshutter must be as small as possible, so as to enable a large number of them to be aligned on a large screen, to improve the reproducibility of an image, when they are used in a display device, or to enable an image to be obtained with high resolution, when they are used in an electro-photo-graphic printer. Since a large number of microshutters are driven in order to obtain a picture or an image with high reproducibility, the liquid crystal optical device must satisfy the following requirements:

(1) a large ratio of intensities of transmitted light
   between the ON and OFF states, i.e., a high degree of contrast,
(2) a high intensity of transmitted light in the ON state, and
(3) high-speed response.

A number of electro-photographic printers have been proposed, which may be used in the computer terminals or office equipment referred to above.

An alphanumeric printer system using a matrix type liquid crystal device, in which a nematic cholesteric compound is sealed between a pair of substrates on which electrode matrices are formed, is disclosed in U.S.P. 3,824,604. This printer system utilizes a liquid crystal matrix in which each alphanumeric character is constituted by a 7 (lines) x 5 (rows) block. Fiber optic lines are provided for each block. Light according to ON or OFF of the liquid crystal matrix is guided through the fiber optic lines onto a photosensitive drum (selenium drum), whereby alphanumeric characters are printed on the drum. However, since the liquid crystal matrix of this printer system utilizes a nematic cholesteric compound, and each character has the 7 (lines) x 5 (rows) pixel arrangement, an alphanumeric character and image cannot be precisely expressed in a desired format. In addition, this system has a rise time of 10 msec and a decay time of 350 msec, i.e., a low operating speed.

An electro-photographic printer using a twisted nematic type liquid crystal device used for example for a display, is disclosed in DE. 2711194-A1 and U.S.P. 4297022. In the liquid crystal device of this printer, a microshutter array is formed, in which microshutters corresponding to pixels are aligned in one or two lines. The above liquid crystal device is a TN type liquid crystal device. Therefore, even if it uses a liquid crystal device having good response characteristics, and if various conditions such as the driving voltage, the thickness of a liquid crystal layer, and the like are optimally set, the rise time and the decay time can only be improved to, at best, 2 msec and 20 msec, respectively.

When an electro-photographic printer using the liquid crystal device described above is used in practical applications, each microshutter must be very small, i.e., 0.1 mm$^2$ or smaller, in order to improve image resolution and to permit the reproduction of fine detail. An image for one page of a paper sheet is formed by a large number of light spots, i.e., a large number of dots, controlled by the microshutters. For this reason, in order to obtain a practical printing speed at which about ten A4-size paper sheets can be printed per minute, the microshutters must be driven at very high speed. Therefore, the above-mentioned known electro-photographic printer cannot provide a practical printer to satisfy this requirement.

In order to solve the above problem, a TN type liquid crystal device with an increased twist angle is driven by a two-frequency addressing scheme, so as to obtain a high-speed response. In this TN type liquid crystal device, a relatively large amount of chiral liquid crystal for increasing twist power is added to a liquid crystal compound exhibiting a dielectric dispersion phenomenon, thereby increasing the twist angle. Electric fields of high and low frequencies are selectively applied to the liquid crystal compound of the liquid crystal device. In the two-frequency addressing scheme, liquid crystal molecule alignment is controlled in such a manner that an electric field of high frequency (e.g., 100 kHz) is applied to a liquid crystal, to align the molecular axis of liquid crystal molecules so as to be perpendicular to the applied electric field, and an electric field of low frequency (e.g., 200 Hz) is applied thereto, to align the liquid crystal molecular axis so as to be parallel to the applied electric field. With this addressing scheme, the liquid crystal device can have high-speed response.

Printers using the above-mentioned TN type liquid crystal device are disclosed in U.S.P. 4386836, DE. 3213872-A1, U.S.P. 4609256, and EP 0083253.

The liquid crystal device used in these printers can ON/OFF-control microshutters such that electric fields of high and low frequencies are alternately and repetitively applied every 1 msec.

However, in the TN type liquid crystal device, liquid crystal molecules must be twist-aligned by twist power of liquid crystal molecules. Therefore, a delay time in operation, caused by the twist alignment cannot be ignored, and hence, this device has a limited maximum response speed. More specifically, in a positive display (a normally-ON display in which a pair of polarizing plates are arranged so that their polarizing axes are perpendicular to each other), when a high-frequency electric field is applied to switch from an OFF state to an ON state, the response speed is delayed by the time required for twist alignment, and it is therefore difficult to obtain a sufficiently short rise time. The TN type liquid crystal device exhibits poor temperature stability, and the thickness of a liquid crystal layer must be precisely controlled. In addition, since the TN type liquid crystal has a large twist angle, light leakage caused by optical rotary dispersion is considerable, and contrast is low.

In order to solve the above problem, some liquid crystal devices adopt a Guest-Host effect type liquid crystal device. In the GH type liquid crystal device, a liquid crystal material for two-frequency addressing, to which a dichroic dye is added is sealed between substrates which are respectively subjected to a homogeneous aligning treatment in directions parallel to each other. As the liquid crystal material, a liquid crystal composition exhibiting a dielectric dispersion phenomenon is used.

An image-forming apparatus using the above GH type liquid crystal device has already been filed as U.S. Serial No. 630957, by some of the present inventors. This apparatus is also filed in England as GB 2144869B.

In the GH type liquid crystal device, dye molecules are aligned so as to be parallel to the substrate, together with liquid crystal molecules, upon application of the high-frequency electric field, and an OFF state is established, since light of a specific wavelength range is absorbed by the dye. When the dye molecules are aligned so as to be perpendicular to the substrate, together with the liquid crystal molecules, they cannot absorb light, and thus an ON state is established.

In the GH type liquid crystal device, a transition between the ON and OFF states can be realized by homogeneous and homeotropic alignments of the liquid crystal molecules, without twist alignment having to be preformed. Consequently, this device can provide a higher response speed than the TN type liquid crystal device, because of the absence of a delay time arising from twist alignment. In addition, the temperature stability of the device is improved. The effective amount of light transmitted during the ON operation can be increased, and high contrast can be obtained while the device is in actual operation. As a result, when the GH type liquid crystal device is used in an optical printing head, liquid crystal optical printers are able to reach a technical level which allows actual mass production.

However, in the liquid crystal optical printer using the GH type liquid crystal device, some problems still remain unsolved. These are how to meet the continuing requirement for a still higher contrast and stabler temperature characteristics. Stated more specifically, the contrast of the GH type liquid crystal device depends, in the main, on the dichroic ratio of the dye added, the dye concentration, cell thickness, and the like. For this reason, the dye added to the liquid crystal must satisfy the following requirement:

(1) it must have a high dichroic ratio;

(2) it must have a maximum absorption wavelength range which coincides with a maximum emission wavelength range of emission spectral characteristics of a light source;

(3) it must have a high solubility with respect to a liquid crystal as a "host"; and

(4) it must have a high absorbency.

Since it is difficult to find a dye which can satisfy all the above requirements, any improvement in the contrast of the liquid crystal device is therefore limited. Since fluctuation of the dye molecules changes depending on temperature, transmittance in the OFF state is unstable, and hence, the temperature stability of contrast is degraded, resulting in a very narrow operation temperature range.

Some liquid crystal devices for controlling the ON and OFF state of light utilize an electrically controlled birefringence type liquid crystal device is proposed. In this liquid crystal device, a nematic liquid crystal having positive dielectric anisotropy $\Delta\epsilon$ is sealed between a pair of substrates which are respec tively subjected to a homogeneous aligning treatment process in directions parallel to each other, and polarizing plates are respectively arranged on the outer surfaces of the pair of substrates. The polarizing axes of these polarizing plates are perpendicular to each other, and intersect, at 45°, the direction at which the homogeneous aligning treatment of the substrates is performed.

When an electric field is applied to the liquid crystal device, liquid crystal molecules are homeotropically aligned with respect to the substrates, and the polarizing axes of the pair of polarizing plates are perpendicular to each other. Therefore, no light is transmitted therethrough, and an OFF state is established. When the electric field is turned off, the liquid crystal molecules return to a homogeneous alignment state due to their alignment power, and the liquid crystal device transmits light in a tilt alignment state during a transition from the homeotropic alignment state to the homogeneous alignment state, thereby establishing the ON state.

Liquid crystal optical printers using such liquid crystal device are disclosed in U.S.P. 4569574, U.S.P. 4595259, and Japanese Patent Diclosure (Kokai) Nos. 56-115277, 59-119330, and 60-182421. In the liquid crystal device, since the liquid crystal molecules only behave between the tilt alignment state and the homeotropic alignment state, with respect to the substrates, during the ON and OFF operations, their operation angle can be small. In addition, since the liquid crystal molecules do not need to be twist-aligned, the device can have a considerably higher response speed than the TN type liquid crystal device using an Np liquid crystal. However, in the liquid crystal device, the power for obliquely aligning the liquid crystal molecules is defined only by the alignment power acting between the substrates and the liquid crystal molecules. For this reason, the response speed during the transition from the OFF state to the ON state is still low. The operating speed of the liquid crystal molecules depends on the viscosity of the liquid crystal, and the viscosity depends on a temperature. Therefore, the liquid crystal device has a poor temperature stability.

In order to solve the above problem, another technique is proposed. In this technique, a liquid crystal compound exhibiting a dielectric dispersion phenomenon is used for the above-mentioned electrically controlled birefringence type liquid crystal device, and is turned on and off upon selective application of electric fields of two frequencies, i.e., high and low frequencies.

Liquid crystal optical printers using the liquid crystal device are disclosed in Japanese Patent Disclosure (Kokai) Nos. 58-176620, 61-87136, and 59-91417. In the liquid crystal device used in these printers, the liquid crystal molecules behave upon application of the electric field when the liquid crystal molecules are homeotropically aligned and when they are obliquely aligned. Therefore, the device can have a considerably high response speed. In addition, the liquid crystal optical printer using the liquid crystal device has a possibility of high-speed printing.

The ON state of this liquid crystal device corresponds to a state wherein the liquid crystal molecules are obliquely aligned. In this state, light is transmitted through a pair of polarizing plates arranged in crossed nicols due to birefringence of the liquid crystal layer, and hence, this state corresponds to the ON state. Due to birefringence, the transmittance differs for respective wavelengths of light, as does the optical anisotropy of the liquid crystal material itself. Therefore, when the liquid crystal device is in the ON state, the transmitted light inevitably has specific spectral characteristics. More specifically, light emitted from a white light source is colored when it is transmitted through the liquid crystal. This implies that light incident on the liquid crystal is partially absorbed, and the liquid crystal has a low transmitted light intensity and low contrast.

The printing speed of the liquid crystal optical printer is determined by the length of time which is necessary for a charge point on a uniformaly charged photosensitive drum to be discharged by light transmitted through microshutters provided on the liquid crystal. When an image for one page of a paper sheet is formed, a large number of dot lines must be written. Therefore, if the time required for writing one dot line is long, a considerable length of time will be required for writing an image for one complete page, and thus, high-speed printing will not be possible. On a portion corresponding to one dot line on the photosensitive drum, a surface charge is discharged when a product of a radiation time and the intensity of the light transmitted through the microshutter array of the liquid crystal device and radiated on the photosensitive drum reaches a predetermined value. The photosensitive drum senses light depending on the amount of light transmitted through the individual micro shutters. For this reason, if the intensity of light transmitted through each micro shutter is low, a longer light radiation time is required for each dot line. Therefore, a liquid crystal optical printer using a liquid crystal with low transmitted light intensity cannot perform high-speed printing.

In this manner, even if the conventional electrically controlled birefringence type liquid crystal is used, since it has a low transmitted light intensity and a low contrast, a sufficiently high printing speed cannot be attained.

In the electrically controlled birefringence type liquid crystal device, since liquid crystal molecules are homogeneously aligned in an initial alignment state among a non-electric field, a light component having specific spectral characteristics is transmitted due to the birefringence of the liquid crystal. The transmitted light is leaked light, and this irradiates an undesirable portion, thereby causing various adverse influences.

4

EP 0 251 231 B1

For example, when the photosensitive drum is stopped, light is continuously radiated onto one point on the photosensitive drum, and causes degradation of drum.

As has been described above, the electrically controlled birefringence type liquid crystal device still has various drawbacks, such as the need for an improvement in the intensity of the transmitted light, the need to improve the contrast, and to prevent light leakage in the initial alignment state.

A liquid crystal optical system known from GB-A-2144869 comprises a liquid crystal material of a guest-host type containing a dichroic dye as a guest having an alignment dependent maximum absorption at a wavelength of maximum emission of a light source alignment films on both sides of opposing transparent substrates, an electrode arrangement on one of said substrates, and a polarizing plate formed on the substrate on the upstream side relative to the light propagation direction. Voltage control means are connected to the electrodes wherein, the orientation of the host and, accordingly, the guest material changes upon the application of voltage on the electrodes to alter the light absorption characteristic of the guest-host type liquid crystal material.

It is an object of the present invention to provide a liquid crystal optical device (or element) which has high transmitted light intensity and contrast, has high-speed response characteristics, and can prevent light leakage in an initial alignment state.

It is another object of the present invention to provide a liquid crystal optical printer which can print a clear image at high speed.

The foregoing objects are solved according to the invention by a liquid crystal optical system according to claim 1.

In the liquid crystal optical element having the above structure according to the present invention, the spectral characteristics of light transmitted through this element are set to be predetermined specific spectral characteristics in accordance with the alignment state of the liquid crystal material. Therefore, the spectral characteristics in the ON state and/or in respective operating states such as an initial alignment state can be optimally set. In this liquid crystal optical element, OFF and ON states are obtained by alternately setting homeotropic and tilt alignments without twist-aligning the liquid crystal molecules. Therefore, the behavior range of the liquid crystal molecules is very narrow. As a result, the liquid crystal optical element of the present invention has a high transmitted light intensity and a high contrast in the ON state, and can provide a high-speed response property. In addition, the element of this invention can eliminate light leakage. The spectral characteristics of the liquid crystal optical element in the ON state substantially coincide with the spectral intensity distribution of incident light, so that the transmitted light intensity can be improved, and hence, the contrast can also be improved. The spectral characteristics described above can be set by selecting a combination of a optical anisotropy of the liquid crystal material and a thickness of a liquid crystal layer. A birefringence of the liquid crystal layer changes in accordance with a tilt angle of the liquid crystal molecules. Therefore, an application time of an electric field for obliquely aligning the liquid crystal molecules is controlled, so that the tilt angle of the liquid crystal molecules corresponding to the ON state can be specified and the specific spectral characteristics of the liquid crystal optical element can be set. In this case, since the spectral characteristics can be desirably changed by only a driving method, the setting operation can be facilitated. If the spectral characteristics of the liquid crystal optical element in the initial alignment state do not virtually coincide with the spectral intensity distribution of the incident light, unnecessary light leakage can be prevented. The spectral characteristics can be set in this manner by selecting the anisotropy of the liquid crystal material itself and the thickness of the liquid crystal layer. This can also be realized by selecting the initial alignment of the liquid crystal material to be a tilt alignment. In this case, an angle through which the liquid crystal molecules behave in order to obtain an ON/OFF state of the liquid crystal optical element can be further decreased since the initial alignment corresponds to the tilt alignment, and hence, a still higher response speed can be obtained.

According to the present invention, a liquid crystal optical printer is constituted by using the above-mentioned liquid crystal optical. The printer has high transmitted light intensity and contrast, and has high-response property. Therefore, even in a printer which must form an image using a large number of dots, since an optical write time per dot line can be shortened, high-speed printing can be performed. In this printer, in the spectral characteristics of the liquid crystal optical element in the ON state, a wavelength range with high transmitted light intensity can coincide with a wavelength range in which an energy of spectral energy distribution of a light source is large and/or a wavelength range in which a spectral sensitivity of a photosensitive body is high. As a result, the transmitted light intensity and the contrast can be improved. In the spectral characteristics in the initial alignment state of the liquid crystal optical element, a wavelength range with high transmitted light intensity does not substantially coincide with a wavelength range with high energy of a spectral energy distribution of the light source and/or a wavelength range with

5

high spectral sensitivity of a photosensitive body. As a result, the photosensitive body can be prevented from being irradiated with an unnecessary light beam.

This invention can be more fully understood from the following detailed description when taken in conjunction with the accompanying drawings, in which:

Fig. 1 is a schematic view showing a basic structure of a liquid crystal optical element used in the present invention;

Fig. 2 is a view for explaining the relationship between an aligning treatment direction and polarizing axes of polarizing plates in the optical element shown in Fig. 1;

Fig. 3 is a graph of characteristics showing a frequency dependency of a dielectric anisotropy of a liquid crystal material used in the liquid crystal optical element of the present invention;

Fig. 4A is a graph of spectral characteristics in an initial alignment state, which are obtained by calculation;

Fig. 4B is a graph of spectral characteristics in the initial alignment state which are measured for an actual liquid crystal optical element;

Fig. 5A is a graph of operation characteristics showing a change in transmitted light intensity when an electric field application state is switched to a non-electric field state;

Fig. 5B is a partially enlarged graph of Fig. 5A;

Fig. 6 is a graph of spectral characteristics which change in accordance with a tilt angle of liquid crystal molecules;

Fig. 7 is a graph of spectral characteristics in ON and OFF states;

Fig. 8 is a graph of operation characteristics when the optical element is driven upon repetition of the electric field application state and the non-electric field state;

Fig. 9 is a graph of operation characteristics when the optical element is driven by a basic two frequency addressing scheme;

Fig. 10A is a graph of operation characteristics at a temperature of 55°C when the optical element is driven by the two frequency addressing scheme;

Fig. 10B is a graph of operation characteristics at a temperature of 35°C when the optical element is driven by the two frequency addressing scheme;

Fig. 11 is a view for explaining definition of a response time and a contrast of the liquid crystal optical element;

Fig. 12 is a graph of characteristics showing a frequency dependency of a dielectric anisotropy of the liquid crystal material at respective temperatures;

Fig. 13a is a waveform chart and a graph of response characteristics, showing a waveform of an electric field for driving the liquid crystal optical element of the present invention when an application time of high-frequency electric field fH is 0.75 msec and a temperature is 55°C;

Fig. 13B is a graph of response characteristics at a temperature of 35°C when the optical element is driven by the electric field having the waveform shown in Fig. 13A;

Fig. 14A is a waveform chart and a graph of response characteristics showing a waveform of an electric field for driving the liquid crystal optical element of the present invention when an application time of high-frequency electric field fH is 0.5 msec and a temperature is 55°C;

Fig. 14B is a graph of response characteristics at a temperature of 35°C when the optical element is driven by the electric field having the waveform shown in Fig. 14A;

Fig. 15A is a waveform chart and a graph of response characteristics, showing a waveform of an electric field for driving the liquid crystal optical element of the present invention when an application time of high-frequency electric field fH is 0.25 msec and a temperature is 55°C;

Fig. 15B is a graph of response characteristics at a temperature of 35°C when the optical element is driven by the electric field having the waveform shown in Fig. 15A;

Fig. 16 is a graph of spectral characteristics in the ON state when the optical element is driven by the electric field having the waveform shown in Fig. 14A;

Fig. 17 is a detailed electric field waveform chart and a graph of response characteristics for driving the liquid crystal optical element of the present invention;

Fig. 18 is another detailed electric field waveform chart and another graph of response characteristics for driving the liquid crystal optical element of the present invention;

Fig. 19 is still another detailed electric field waveform chart and still another graph of response characteristics for driving the liquid crystal optical element of the present invention;

Fig. 20 is a graph showing a wavelength dependency of a optical of a liquid crystal material used in a first embodiment;

6

Fig. 21 is a graph of transmission characteristics showing a transmittance with respect to a tilt angle of liquid crystal molecules;

Fig. 22 is a graph of spectral characteristics of a UV cut filter and an IR cut filter used for measuring the transmission characteristics of the liquid crystal optical element of the present invention;

Fig. 23 is a graph of spectral characteristics of R, G, and B filters for measuring the transmission characteristics of the liquid crystal optical element of the present invention for the respective colors;

Fig. 24A is a graph of transmission characteristics with respect to red light when an application time of a high-frequency electric field is set to be 0.25 msec;

Fig. 24B is a graph of transmission characteristics with respect to green light when an application time of a high-frequency electric field is set to be 0.25 msec;

Fig. 24C is a graph of transmission characteristics with respect to blue light when an application time of a high-frequency electric field is set to be 0.25 msec;

Fig. 25A is a graph of transmission characteristics with respect to red light when an application time of a high-frequency electric field is set to be 0.5 msec;

Fig. 25B is a graph of transmission characteristics with respect to green light when an application time of a high-frequency electric field is set to be 0.5 msec;

Fig. 25C is a graph of transmission characteristics with respect to blue light when an application time of a high-frequency electric field is set to be 0.5 msec;

Fig. 26A is a graph of transmission characteristics with respect to red light when an application time of a high-frequency electric field is set to be 0.75 msec;

Fig. 26B is a graph of transmission characteristics with respect to green light when an application time of a high-frequency electric field is set to be 0.75 msec;

Fig. 26C is a graph of transmission characteristics with respect to blue light when an application time of a high-frequency electric field is set to be 0.75 msec;

Fig. 27 is a graph of transmission characteristics of respective colors showing transmittances of the respective colors with respect to the application time of the high-frequency electric field for a liquid crystal optical element using liquid crystal material 1;

Fig. 28 is a graph of transmission characteristics of respective colors showing transmittances of the respective colors with respect to the application time of the high-frequency electric field for a liquid crystal optical element using liquid crystal material 2;

Fig. 29 is a graph of spectral characteristics in the initial alignment state when $\Delta nb.d$ of the liquid crystal optical element of the present invention is set to be 0.564;

Fig. 30 is a graph of spectral characteristics in the initial alignment state when $\Delta nb \cdot d$ of the liquid crystal optical element of the present invention is set to be 0.706;

Fig. 31 is a graph of spectral characteristics in the initial alignment state when $\Delta nb \cdot d$ of the liquid crystal optical element of the present invention is set to be 0.836;

Fig. 32 is a graph of spectral characteristics in the initial alignment state when $\Delta nb \cdot d$ of the liquid crystal optical element of the present invention is set to be 1.136;

Fig. 33 is a graph of spectral characteristics when $\Delta nb \cdot d$ exhibiting a minimum transmittance with respect to light of a wavelength of 543 mm is selected;

Fig. 34A is a graph showing response characteristics in the liquid crystal optical element in which $\Delta nb \cdot d$ is selected to be 0.564, and a transmitted light intensity in the initial alignment state;

Fig. 34B is a graph showing response characteristics in the liquid crystal optical element in which $\Delta nb \cdot d$ is selected to be 0.706, and a transmitted light intensity in the initial alignment state;

Fig. 34C is a graph showing response characteristics in the liquid crystal optical element in which $\Delta nb \cdot d$ is selected to be 0.836, and a transmitted light intensity in the initial alignment state;

Fig. 34D is a graph showing response characteristics in the liquid crystal optical element in which $\Delta nb \cdot d$ is selected to be 1.136, and a transmitted light intensity in the initial alignment state;

Fig. 35 is a schematic sectional view of a liquid crystal optical element in which liquid crystal molecules are initially aligned to be inclined at a pre-tilt angle;

Fig. 36 is a view for explaining the relationship between the direction of the aligning treatment and the direction of the polarizing axes of the polarizing plates;

Fig. 37 is a graph of spectral characteristics when an angle formed by the alignment direction and the polarizing axis of the polarizing plate is changed in the initial alignment state of the liquid crystal optical element having a cell thickness of 4.15 $\mu$m;

Fig. 38 is a graph of spectral characteristics when an angle formed by the alignment direction and the polarizing axis of the polarizing plate is changed in the initial alignment state of the liquid crystal optical element having a cell thickness of 4.68 $\mu$m;

Fig. 39 is a schematic view of a liquid crystal optical printer using the liquid crystal optical element of the present invention;

Fig. 40 is a graph showing a spectral sensitivity of a photosensitive drum used in the printer shown in Fig. 39;

Fig. 41 is a graph of spectral characteristics showing a spectral energy distribution of a light source used in the printer shown in Fig. 39;

Fig. 42 is a plan view of a liquid crystal shutter used in the printer shown in Fig. 39;

Fig. 43 is a sectional view of the liquid crystal shutter shown in Fig. 42 taken along a line A - A therein;

Fig. 44 is an exploded perspective view of the liquid crystal shutter shown in Fig. 42;

Fig. 45 is an enlarged plan view of a shutter portion of the liquid crystal shutter shown in Fig. 42;

Fig. 46 is a circuit diagram of the liquid crystal shutter driver shown in Fig. 42;

Figs. 47A to H are waveform charts for driving the liquid crystal shutter shown in Fig. 42;

Figs. 48A to J are other waveform charts for driving the liquid crystal shutter shown in Fig. 42;

Fig. 49A is a graph of response characteristics of the waveform shown in Figs. 48A to J when an ON electric field is applied to the shutter portion of the liquid crystal optical element;

Fig. 49B is a graph of response characteristics of the waveform shown in Figs. 48A to J when another ON electric field different from that shown in Fig. 49A is applied to the shutter portion of the liquid crystal optical element;

Fig. 49C is a graph of response characteristics of the waveform shown in Figs. 48A to J when an OFF electric field is applied to the shutter portion of the liquid crystal optical element; and

Fig. 49D is a graph of response characteristics of the waveform shown in Figs. 48A to J when another OFF electric field different from that shown in Fig. 49C is applied to the shutter portion of the liquid crystal optical element.

The present invention will be described hereinafter with reference to the accompanying drawings.

A. A basic structure and an operation of a liquid crystal optical device (element) of the present invention will now be described.

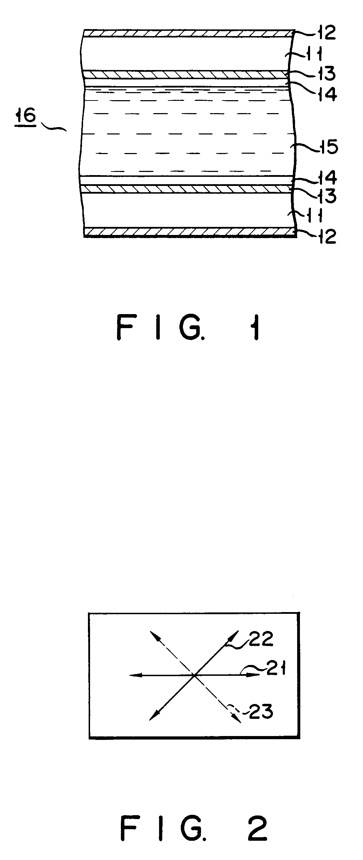

(1) In Fig. 1, substrates 11 are arranged to be separated at a predetermined distance. Polarizing plates 12 are stacked on the outer surfaces of substrates 11, and transparent electrodes 13 and alignment films 14 are stacked on the inner surfaces thereof. Liquid crystal material which is driven by two-frequency addressing mode (hereinafter two-frequency addressing liquid crystal material) 15 forming an optical shutter together with electrodes 13 is sealed to be sandwiched between substrates 11.

Fig. 2 shows the relationship between the alignment direction of liquid crystal molecules of liquid crystal optical device 16 having the above structure and the directions of polarizing axes of polarizing plates 12. In Fig. 2, reference numeral 21 denotes an alignment direction of liquid crystal molecules; 22, a direction of a transmission axis (or absorption axis) of upper polarizing plate 12; and 23, a direction of a transmission axis (or absorption axis) of lower polarizing plate 12. More specifically, two-frequency addressing liquid crystal material 15 is sealed in a liquid crystal cell subjected to a homogeneous aligning treatment, so that the polarizing axis (transmission axis or absorption axis) of at least one polarizing plate 12 is set to intersect the alignment direction of the liquid crystal molecules at 45°, and the polarizing axes of upper and lower polarizing plates 12 are set to be perpendicular to each other. With this arrangement, an electrically controlled birefringence type liquid crystal optical element can be obtained.

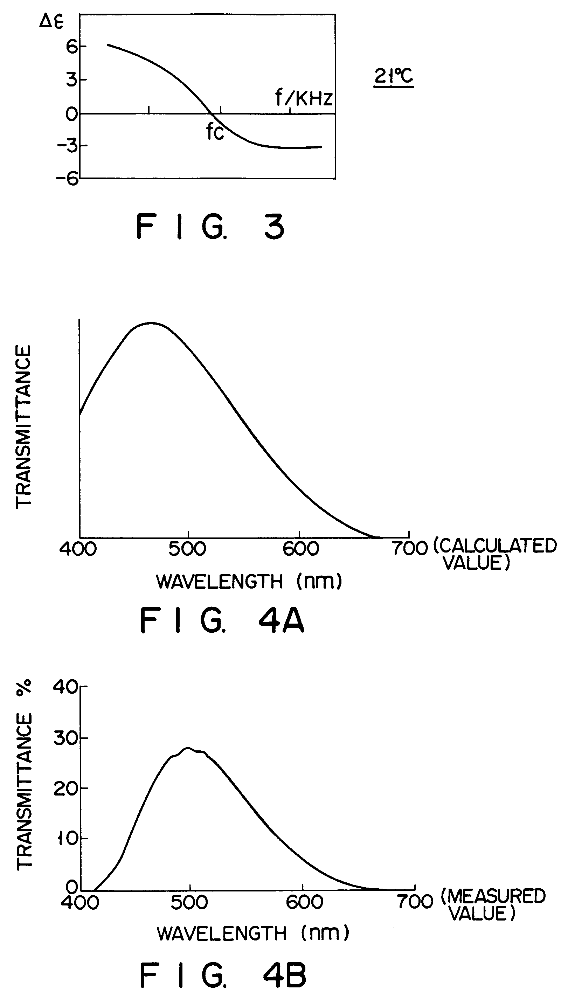

Liquid crystal material 15 has crossover frequency fc whose dielectric anisotropy $\Delta\epsilon$ becomes "0", as shown in Fig. 3, and exhibits a positive dielectric anisotropy with respect to electric field fL having a frequency lower than frequency fc and exhibits a negative dielectric anisotropy with respect to electric field fH having a frequency higher than frequency fc.

(2) Transmitted light intensity I in liquid crystal optical element 16 can be obtained by the following equation (1):

$$I = I_0 \sin^2 2\theta \cdot \sin^2(\pi \cdot \Delta nb \cdot d/\lambda) \qquad (1)$$

where

$I_0$: intensity of light determined by transmittance of a pair of polarizing plates whose polarizing axes are arranged to be parallel to each other

$\theta$: angle formed by optical axis of liquid crystal in an initial alignment state and polarizing axis of polarizing plate

$\Delta nb$: birefringence depending on angle $\phi$ formed by normal to substrate surface and optical axis of liquid crystal

$\lambda$: wavelength of incident light

d:        thickness of liquid crystal layer

Birefringence Δnb changes in accordance with tilt angle $\phi$ of liquid crystal molecules. However, this can be expressed by the following equations (2), (3), and (4) if optical anisotropy n// in a direction parallel to the optical axis of the liquid crystal and optical anisotropy n⊥ in a direction perpendicular to the optical axis are known:

$$\Delta nb = ne - no \qquad (2)$$

$$ne = (n// \cdot n⊥)/\sqrt{n^2// \cos^2\phi + n^2⊥ \sin^2\phi} \qquad (3)$$

$$no = n⊥ \qquad (4)$$

where
ne:      optical anisotropy of extraordinary light
no:      optical anisotropy of ordinary light

Therefore, the transmitted light intensity of the electrically controlled birefringence type liquid crystal optical element is changed in accordance with birefringence Δnb and thickness d ($\mu$m) of the liquid crystal layer, and Δnb·d is changed in accordance with tilt angle $\phi$ of liquid crystal molecules. Tilt angle $\phi$ can be given by the above equations (2), (3), and (4).

Spectral characteristics in an initial alignment state were calculated on the basis of equation (1) when a liquid crystal material having characteristics shown in Table 1 below was used in the liquid crystal optical element shown in Fig. 1 and thickness d of the liquid crystal layer was set to be 5.09 $\mu$m. Birefringence Δnb in the initial state is equal to the optical anisotropy Δna (= n// - n⊥). The optical anisotropy Δna is a measurement value at a wavelength of 589 nm and is not changed upon change in wavelengths.

## Table 1 (liquid crystal material (1))

| NI point | Viscosity | optical anisotropy | |
|---|---|---|---|
| 144.1°C | 96 cp at 25°C | n // = 1.632 n⊥ = 1.496 | 589 nm at 23°C |

Fig. 4A shows the calculation result. Fig. 4B shows the result when the above-mentioned liquid crystal optical element was manufactured in practice and spectral characteristics in the initial alignment state were actually measured. In this case, a UV cut filter for shielding light having a wavelength of 375 nm or lower is provided to the polarizing plate. The calculation data and the measurement data shown in Figs. 4A and 4B coincide well each other in consideration of conditions upon calculation and measurement.

If this initial alignment state is defined as a shutter ON state, the spectral characteristics are considerably changed depending on "Δnb·d", and flat spectral characteristics cannot be provided. Therefore, it is not preferable for a shutter with respect to a white light source.

The operation characteristics of the above-mentioned electrically controlled birefringence type liquid crystal optical element were examined.

A nematic liquid crystal having characteristics shown in Table 2 below was sealed in a cell having a cell thickness of 5.10 $\mu$m, and its operation characteristics were measured.

## Table 2

| NI point | Viscosity | Optical anisotropy | |
|---|---|---|---|
| 58.3°C | 15.7 cp at 25°C | n // = 1.706 n⊥ = 1.512 | 589 nm at 20°C |

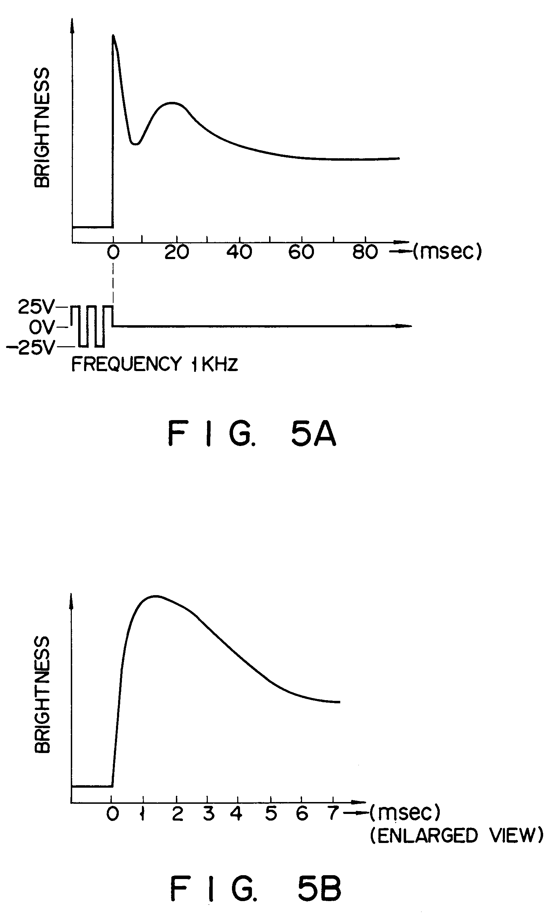

Fig. 5A shows a transmitted light intensity when a 1-kHz AC electric field is applied and then a non-electric field state wherein no electric field is applied is set. A fluorescent lamp having an emission peak wavelength of 543 nm and a half-width of about 20 nm was used as a light source for measurement. As shown in Fig. 5A, when an electric field is kept applied, liquid crystal molecules are homeotropically aligned with respect to glass substrates 11, and the transmitted light intensity is low. In the non-electric field state, the liquid crystal molecules are gradually tilted by an initial alignment power, and at last, are homogeneously aligned.

At this time, the transmitted light intensity is returned to a transmission intensity in the initial alignment state in about 60 msec while exhibiting two peaks along the time base. Fig. 5B shows the expanded time base near the first peak of Fig. 5A. As can be seen from Fig. 5B, about 1 msec is required to reach the first peak.

The spectral characteristics at respective times shown in Fig. 5A can be calculated using above equations (1) to (4). The spectral characteristics depend on value $\Delta$nb in accordance with tilt angle $\phi$ of liquid crystal molecules during a transition period from when homeotropic alignment is established upon application of an electric field until homogeneous alignment is established due to natural relaxation.

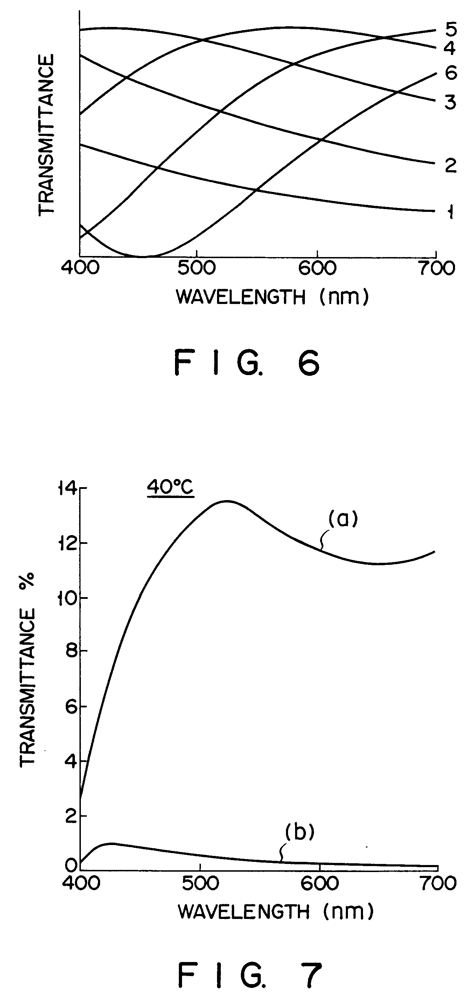

Fig. 6 shows the calculation result of the spectral characteristics. In Fig. 6, the spectral characteristics are calculated from "$\phi$ = 20°" to "$\phi$ = 45°" for every 5°. Curve (1) shows a case of "$\phi$ = 20° and $\Delta$nb = 0.019"; (2), a case of "$\phi$ = 25° and $\Delta$nb = 0.030"; (3), a case of "$\phi$ = 30° and $\Delta$nb = 0.042"; (4), a case of "$\phi$ = 35° and $\Delta$nb = 0.056"; (5), a case of "$\phi$ = 40° and $\Delta$nb = 0.072"; and (6), a case of "$\phi$ = 45° and $\Delta$nb = 0.088". Upon application of the electric field, liquid crystal molecules are homeotropically aligned, and "$\Delta$nb = 0". Therefore, the transmitted light intensity is "0", and a display is perfectly black. From the spectral characteristics of Fig. 6, since curve (4) has the highest average transmittance, it can be understood that curve (4) corresponds to the above-mentioned first peak. The first peak is exhibited when the liquid crystal molecules are tilted at about 35° with respect to the normal to the substrate surface. In a state wherein the liquid crystal molecules are tilted so as to exhibit the first peak of the transmitted light intensity, relatively flat spectral characteristics can be obtained, and this state can be utilized for a shutter for controlling ON/OFF states of white light.

Fig. 7 shows measurement data of spectral characteristic curve (a) when the above-mentioned liquid crystal cell is alternately driven for every 4 msec in an electrical field application state at a frequency of 1 kHz and a voltage of 25 V and in a non-electric field state, and of spectral characteristic curve (b) when an electric field is continuously applied. A transmittance when the electric field is continuously applied is 1% or less, and is 11 to 14% when the electric field application state and the non-electric field state are repeated. A change width in transmittance with respect to a change in wavelength is 3% or less. Therefore, the liquid crystal cell has substantially flat spectral characteristics, and can be used as a shutter.

However, in the liquid crystal shutter using natural relaxation, a time required until the light transmittance reaches a peak value, i.e., a response time is about 1 msec. This response time depends on the viscosity, the optical, and splay elastic constant K//. These constants are not so different in various types of liquid crystal materials. Therefore, in practice, it is difficult to drive the shutter with a response time of 1 msec or less.

The above-mentioned liquid crystal cell is used as an optical control device for, e.g., an electrophotographic printer. Since the optical control device serves as an optical shutter corresponding to small dots (e.g., 0.1 mm x 0.1 mm or less) for printing a character and the like, a shutter ON operation for allowing light to transmit therethrough and a shutter OFF operation for shielding light must be switched at very high speed. Therefore, such a requirement for the high-speed shutter is not yet satisfied, and the above cell cannot be used for the high-speed shutter which requires a response time of 1 msec or less.

(3) The present inventors sealed two-frequency addressing liquid crystal material 15 in liquid crystal cell 16 shown in Fig. 1 to prepare a liquid crystal device. In this liquid crystal device, when an AC electric field having a frequency lower than crossover frequency fc, e.g., 1 kHz (higher than a threshold voltage, for example, a terminal voltage is ±25 V) is applied, liquid crystal molecules are homeotropically aligned with respect to the substrate surface, thus establishing a shutter OFF state. When an AC electric field of a frequency higher than crossover frequency fc is applied in this state, the liquid crystal molecules are to return to the initial alignment state at high speed due to the electric field. At this time, birefringence $\Delta$nb is gradually changed in accordance with tilt angle $\phi$ of liquid crystal molecules, and reaches the above-mentioned first peak near predetermined "$\Delta$nb•d", and a bright state exhibiting relatively flat characteristics is established. This state can be used as a shutter ON state, and response characteristics can be improved.

The above liquid crystal optical device is driven by the two frequency addressing scheme.

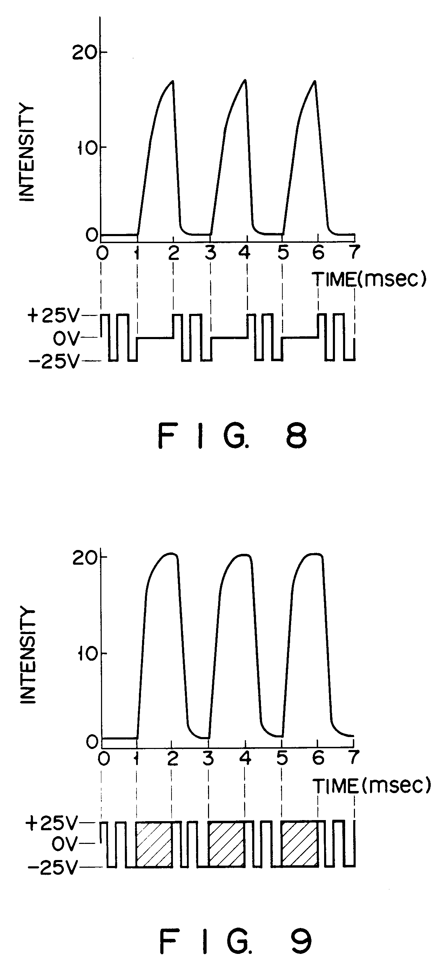

Fig. 8 shows a case wherein a sawtooth wave in which 25V AC electric field fL of a frequency of 5 kHz lower than crossover frequency fc and a non-electric field alternately appear is applied to the liquid crystal shutter. In the driving scheme shown in Fig. 8, the shutter OFF state is established when the electric field is applied, and the shutter is gradually opened in the non-electric field state. In this case, since natural relaxation of the homeotropic alignment power of the electric field of the liquid crystal molecules is utilized by setting the non-electric field state after application of the electric field, the response property of the shutter ON state is poor.

Fig. 9 shows the shutter operation when low-frequency AC electric field fL of a frequency of 5 kHz (25 V) and high-frequency AC electric field fH of a frequency of 200 kHz (25 V) are alternately applied to the liquid crystal shutter. In this case, since a homogeneous alignment power is applied to the liquid crystal molecules due to the high-frequency AC electric field, a maximum brightness can be obtained within 1 msec. The spectral characteristics in the shutter ON state are substantially the same as those of the nematic liquid crystal shown in Fig. 7. The transmittance in the shutter OFF state is about 1%, and the transmittance in the shutter ON state is 20% or higher. Therefore, this liquid crystal shutter can be operated as a shutter having an excellent contrast. In the liquid crystal optical element shown in Fig. 9, the liquid crystal molecules are homeotropically aligned upon application of an electric field having a frequency lower than crossover frequency fc to turn off the shutter. Then, the liquid crystal molecules are aligned upon application of the electric field having a frequency higher than crossover frequency fc to be inclined at a predetermined tilt angle allowing the maximum transmittance, thus turning on the shutter. With this driving scheme, when liquid crystal molecules are obliquely aligned, they are driven by the electric field, and the shutter ON operation can be performed at high speed. In Fig. 9, a case is exemplified wherein the shutter is driven at an effective voltage of 25 V. When a higher drive voltage is applied, the shutter operation can be performed at higher speed.

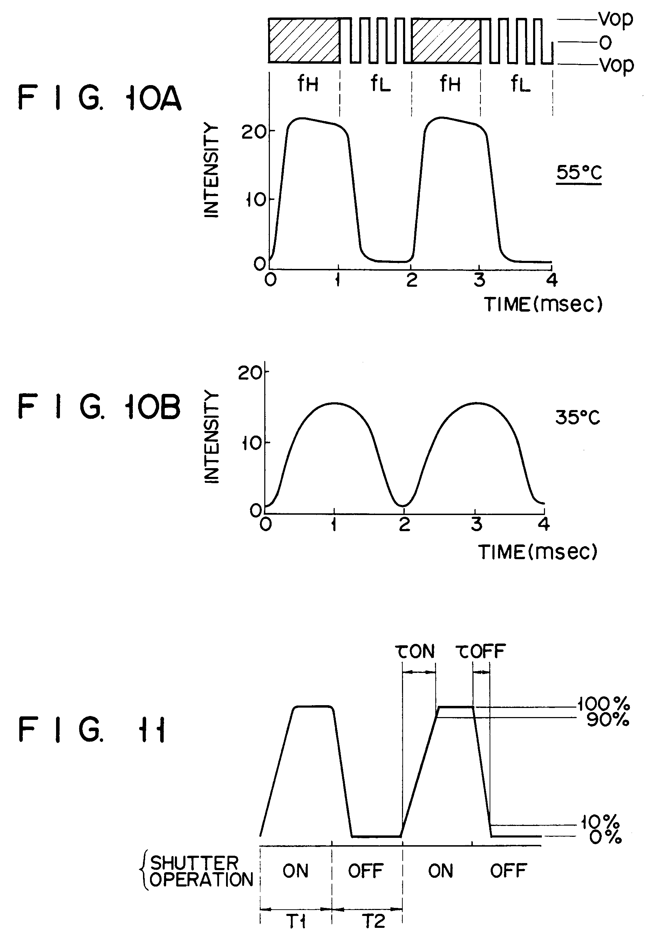

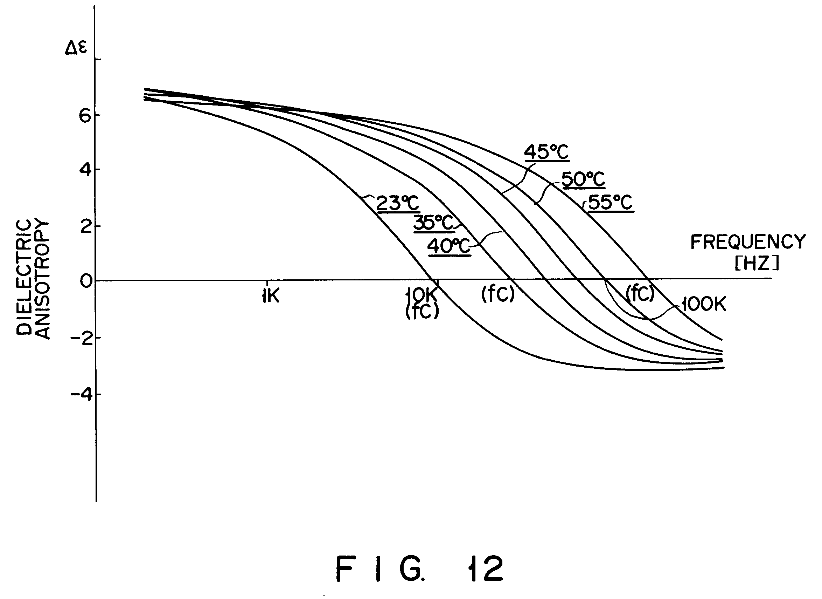

In order to examine the temperature characteristics of the liquid crystal optical element, optical response characteristics were measured when 200-kHz high-frequency AC electric field fH and 4-kHz low-frequency AC electric field fL were applied for every 1 msec to the liquid crystal shutter in the atmosphere at temperatures of 55°C and 35°C. Figs. 10A and 10B show the measurement results. For the response time of the shutter ON/OFF operation as shown in Fig. 11, a shutter ON operation time is given as T1, a shutter OFF operation time is given as T2, a shutter $\tau$ON response time is given as $\tau$ON, a shutter OFF response time is given as $\tau$OFF, ON response time $\tau$ON is defined between 0 to 90%, and OFF response time $\tau$OFF is defined between 100% to 10%.

As shown in Fig. 10A, in the optical response characteristics at a temperature of 55°C, ON response time $\tau$ON is 0.25 msec, and OFF response time $\tau$OFF is 0.4 msec. As shown in Fig. 10B, in the optical response characteristics at a temperature of 35°C, ON response time $\tau$ON is 0.6 msec and OFF response time $\tau$OFF is 0.8 msec. As can be seen from this result, when a temperature is decreased, the response characteristics of the liquid crystal optical element are considerably degraded, and a transmitted light intensity at that time is degraded.

This is because the frequency dependency of dielectric anisotropy $\Delta\epsilon$ of the two-frequency addressing liquid crystal material (to be referred to as two-frequency characteristics hereinafter) is considerably changed upon changes in temperature. A temperature dependency of the two-frequency characteristics is shown in Fig. 12. As shown in Fig. 12, when a temperature is decreased, crossover frequency fc is decreased, and hence, the absolute value of dielectric anisotropy $\Delta\epsilon$H at a high frequency is increased. For this reason, a hysteresis effect due to the high-frequency electric field causes a considerable influence, and liquid crystal molecules are not responsive to application of the low-frequency electric field. The influence of the hysteresis effect of the high-frequency electric field is also caused by the fact that the high-frequency AC electric field fH is applied longer than low-frequency AC electric field fL.

As described above, AC electric fields fH and fL are alternately applied, so that the response characteristics of the liquid crystal shutter can be greatly improved. When AC electric field fH is applied during the entire shutter ON operation time T1, a response time is prolonged at a low temperature, and the response characteristics are considerably degraded. Since the response property is considerably varied upon changes in temperature, an operation temperature range is very narrow.

The above-mentioned liquid crystal optical element uses, as the ON state, the first peak at which the maximum transmitted light intensity is exhibited when the liquid crystal molecules are obliquely aligned. The spectral characteristics at the first peak are flat and good, as shown in Fig. 7. However, a peak value still remains. In the liquid crystal optical element having a peak value in its spectral characteristics, if the peak of the spectral characteristics does not coincide with the peak of spectral intensity distribution of incident light, the transmitted light intensity is decreased, and hence, the contrast is degraded.

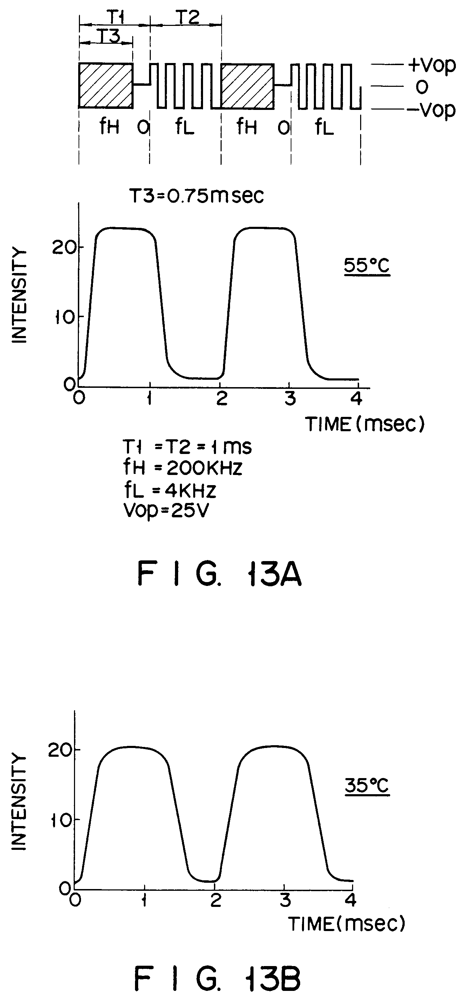

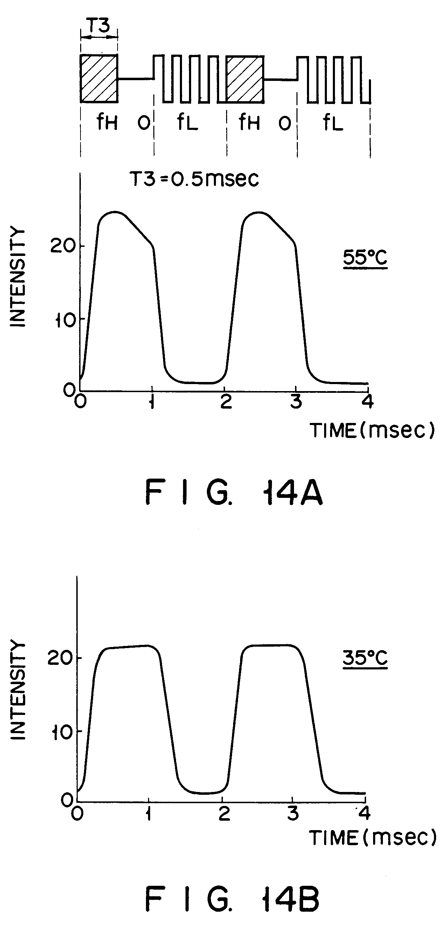

(4) In order to improve the temperature stability characteristics, the liquid crystal optical device of the present invention is driven as follows. In order to widen the operation temperature range of the liquid crystal optical device, high-frequency AC electric field fH is applied not during the entire shutter ON operation time but during a predetermined period of time within operation time T1, as shown in Figs. 13A to 15B, and no electric field is applied during the remaining time period. Thus, a degradation in optical response characteristics at low temperatures can be prevented. More specifically, in order to eliminate the influence of a high-frequency hysteresis effect caused by a decrease in crossover frequency fc accompanying a decrease in temperature, a high-frequency electric field is applied during only a time period until the liquid crystal molecules are inclined at a predetermined angle at which the maximum transmittance upon shutter ON is exhibited, and an application time ratio of the high-frequency electric field is decreased, thereby realizing high-speed response.

Figs. 13A to 15B show response characteristics at temperatures of 55°C and 35°C when fH application time T3 within shutter ON operation time T1 is respectively set to be 0.75 msec, 0.5 msec, and 0.25 msec if shutter ON operation time T1 and shutter OFF time T2 are respectively set to be 1 msec. In this case, no electric field is applied during the remaining time in time T1 after the lapse of fH application time T3.

Table 3 below shows response time in Figs. 13A to 15B.

## Table 3  (unit: msec)

| T3 | 55°C | | 35°C | |
|---|---|---|---|---|
|  | $\tau$ ON | $\tau$ OFF | $\tau$ ON | $\tau$ OFF |
| 0.75 | 0.25 | 0.3 | 0.45 | 0.65 |
| 0.5 | 0.25 | 0.2 | 0.35 | 0.45 |
| 0.25 | 0.25 | 0.15 | 0.25 | 0.25 |

When the above drive operation is performed, ON response time $\tau$ON at a temperature of 55°C does not largely depend on fH application time T3, and can be 0.2 to 0.25 msec, thus obtaining high-speed response property, as can be seen from Table 3. At a temperature of 35°C, the shorter fH application time T3 is, the shorter ON response time $\tau$ON can become. Time $\tau$ON can be 0.25 to 0.45 msec. As for OFF response time $\tau$OFF, since electric field fL is applied after the non-electric field state, the influence of the hysteresis effect of fH which is applied during time T1 can be decreased, and the shorter time T3 is, the better high-speed response property becomes at a temperature of either 35°C or 55°C. As compared to a case wherein AC electric field fH is applied during the entire time T1, the response property can be improved at either temperature. Furthermore, the transmitted light intensity is not decreased at a low temperature, and good temperature characteristics can also be obtained. However, if fH application time T3 is too short, the transmitted light intensity at the high temperature has poor flatness within time T1. In practice, it is not preferred that time T3 is shorter than a time required until application of electric field fH induces the maximum transmitted light intensity. In terms of high-speed response, the application time of electric field fH is preferably half or less of time T1.

Therefore, when the drive voltage waveform of the liquid crystal shutter is selected within the above-mentioned conditions, a high-speed, high-contrast liquid crystal shutter which is free from the influence of the high-frequency hysteresis effect, has a small temperature dependency, and can reduce power consumption since a high-frequency electric field application time is short, can be obtained.

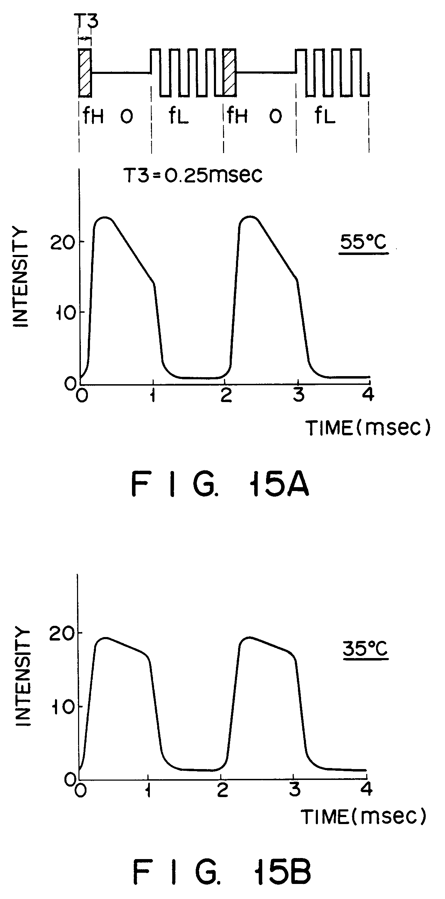

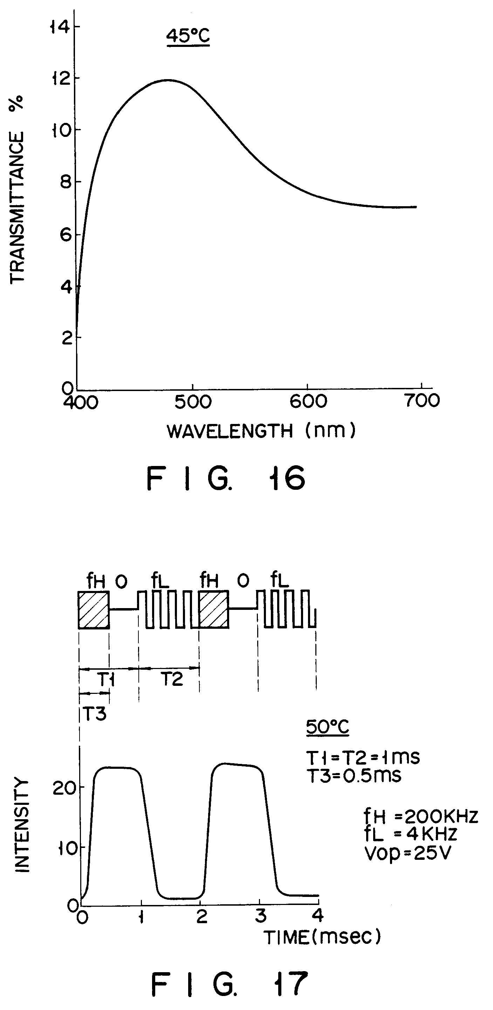

Fig. 16 shows the spectral characteristics at a temperature of 45°C when 25 V, 200 kHz high-frequency electric field fH, no electric field, and 25 V, 4 kHz low-frequency electric field fL are repeatedly applied in this order for 0.5 msec, 0.5 msec and 1 msec, respectively. The transmittance shown in Fig. 15 is an average transmittance when the ON/OFF operation is repeated. The transmittance when the shutter is in the ON state is very high, i.e. about 20%.

Although a peak value is presented at the short wavelength side in a visible light range, the spectral characteristic curve of transmitted light in the shutter ON state can be substantially flat in the remaining wavelength range. Even if any type of light source such as a fluorescent lamp, a white light source, and the like, is used, the above-mentioned shutter can serve as an excellent shutter.

A detailed driving scheme using the above-mentioned driving scheme will now be explained with reference to Figs. 17 to 19.

In a first driving scheme shown in Fig. 17, high-frequency electric field fH is set to be 200 kHz (25 V) and low-frequency electric field fL is set to be 4 kHz (25 V), shutter ON operation time T1 and shutter OFF operation time T2 are respectively set to be 1 msec, and the fH application time is set to be 0.5 msec. The response characteristic curve was measured at a temperature of 50°C.

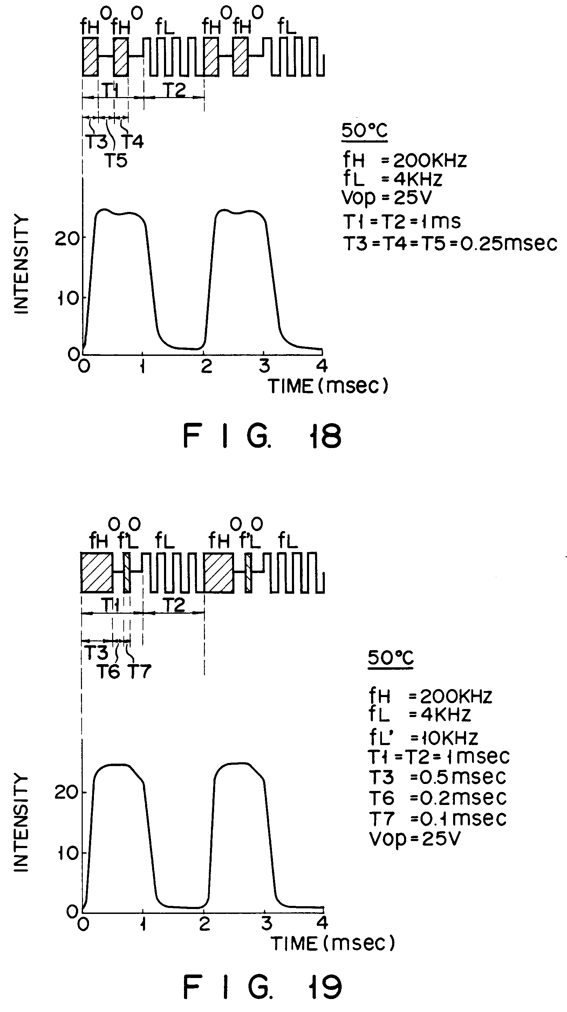

In a second driving scheme shown in Fig. 18, 1 msec shutter ON operation time T1 is divided into four 0.25 msec intervals. The first interval corresponds to first fH application time T3, second interval T5 corresponds to a non-electric field interval, the third interval corresponds to second fH application time T4, and the fourth interval corresponds to a non-electric field interval. Other conditions are the same as those of the electric field waveform shown in Fig. 17.

In a third driving scheme shown in Fig. 19, during shutter ON operation time T1, a first 0.5 msec interval corresponds to fH application time T3, subsequent 0.2 msec interval T6 corresponds to a non-electric field interval, and then 0.1 msec low-frequency electric field fL' application time T7 follows. Low-frequency electric field fL' is set at a frequency lower than crossover frequency fc, e.g., 10 kHz. Other conditions are the same as those in the driving scheme shown in Fig. 17.

In the liquid crystal shutter driving schemes shown in Figs. 17 to 19, a sum of fH application times in each shutter On operation time T1 is 0.5 msec.

Response times $\tau$ON and $\tau$OFF in the liquid crystal shutter driving schemes shown in Figs. 17 to 19 are shown in Table 4 below.

## Table 4 (unit: msec)

| Driving Scheme | $\tau$ON | $\tau$OFF |
|---|---|---|
| First | 0.25 | 0.3 |
| Second | 0.2 | 0.3 |
| Third | 0.2 | 0.25 |

In the first to third driving schemes shown in Figs. 17 to 19, the transmitted light intensity in the third driving scheme is higher than that in the other two schemes. As for the response property, ON response times $\tau$ON in the second and third schemes are shorter than that in the first scheme, as can be seen from Table 4. In the third scheme, OFF response time $\tau$OFF is 0.25 msec and is shorter than that in the other two schemes.

As shown in Figs. 18 and 19, high-frequency electric field fH or low-frequency electric field fL' is applied during the non-electric field interval in shutter ON operation time T1, so that the response property and brightness can be improved, and the temperature characteristics can be satisfactorily stabilized.

With the above-mentioned driving schemes, the liquid crystal optical element of the present invention can have a high shutter response speed and can be driven to have excellent temperature characteristics.

B. The structure and operation for improving a transmitted light intensity and a constant in the liquid crystal optical element of the present invention will be described hereinafter.

(1) In order to increase the transmitted light intensity, the spectral characteristics of the liquid crystal optical element must substantially coincide with the intensity distribution of incident light. In order to prevent light leakage of the liquid crystal optical element, the spectral characteristics in the initial alignment state must be different from the intensity distribution of incident light. For this purpose, in this invention, product $\Delta$nb·d of birefringence $\Delta$nb of the liquid crystal layer and the thickness of the liquid crystal layer is set to be a predetermined specific value for obtaining desired spectral characteristics. In order to set $\Delta$nb·d, a combination of optical anisotropy $\Delta$na inherent to a composition of the liquid crystal material itself and the thickness d of the liquid crystal layer is selected. Alternatively, the tilt angle of the liquid crystal molecules is specified to be a predetermined value so as to change apparent birefringence $\Delta$nb·d of the liquid crystal material, thereby setting $\Delta$nb·d to be the predetermined specific value. As a result, desired spectral characteristics can be obtained such that a light intensity in a desired wavelength range capable of transmitting light can be increased or decreased.

A case will be described wherein a transmitted light intensity in the ON state of the liquid crystal optical element is increased. From equation (1), the transmitted light intensity in the ON state becomes maximum

when $\Delta nb \cdot d$ satisfies the following condition:

$$\Delta nb \cdot d = (N + 1/2)\lambda \qquad (5)$$

$(N = 0, 1, 2,...)$

Therefore, if the wavelength of light in a wavelength range exhibiting a peak value of the spectral intensity distribution of incident light is given as $\lambda$, and if liquid crystal molecules are obliquely aligned at a predetermined angle, optical anisotropy $\Delta na$ of the liquid crystal material itself and thickness $\underline{d}$ of the liquid crystal layer can be set so that a product of birefringece $\Delta nb$ of the liquid crystal layer and thickness $\underline{d}$ at that time satisfies the condition of equation (5). Thus, the liquid crystal optical element which has the maximum transmittance at wavelength $\lambda$ of incident light can be obtained.

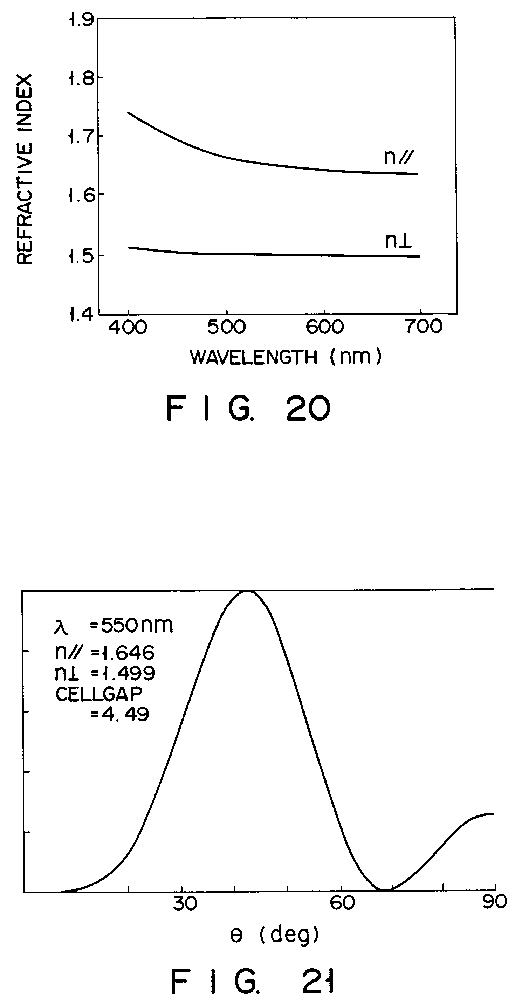

A first embodiment of the present invention wherein a fluorescent lamp having a peak value at a wavelength of 543 nm in the spectral intensity distribution is used as a light source will be described in detail hereinafter. From equation (5), the first peak at which the maximum transmitted light intensity is obtained while liquid crystal molecules are obliquely aligned corresponds to $N = 0$. In this case, $\Delta nb \cdot d$ is 0.2715. Birefringence $\Delta nb$ of the liquid crystal layer changes in accordance with the tilt angle of the liquid crystal molecules, and optical anisotropy $\Delta na$ of the liquid crystal material itself changes upon changes in wavelength. The thickness of the liquid crystal layer is determined in consideration of the electric field intensity and easy manufacture. Therefore, a combination of optical anisotropy $\Delta na$ of the liquid crystal material and thickness $\underline{d}$ of the liquid crystal layer is determined in consideration of the above conditions. For example, the wavelength dependency of the optical anisotropy of liquid crystal material 1 described above is changed as shown in Fig. 20. The refractive indices and the optical anisotropy of this liquid crystal material with respect to light having a wavelength of 544 nm are respectively $n// = 1.638$, $n_\perp = 1.498$, and $\Delta na = 0.14$. In this liquid crystal optical element, when liquid crystal material 1 is used so that $\Delta nb \cdot d$ satisfies the above-mentioned conditions, thickness $\underline{d}$ of the liquid crystal layer is preferably set to be about 4.5 $\mu$m. As a result, a liquid crystal optical element which is turned on when a tilt angle of liquid crystal molecules is about 42° with respect to light having a wavelength of 543 nm from a light source and has a very high transmitted light intensity can be obtained.

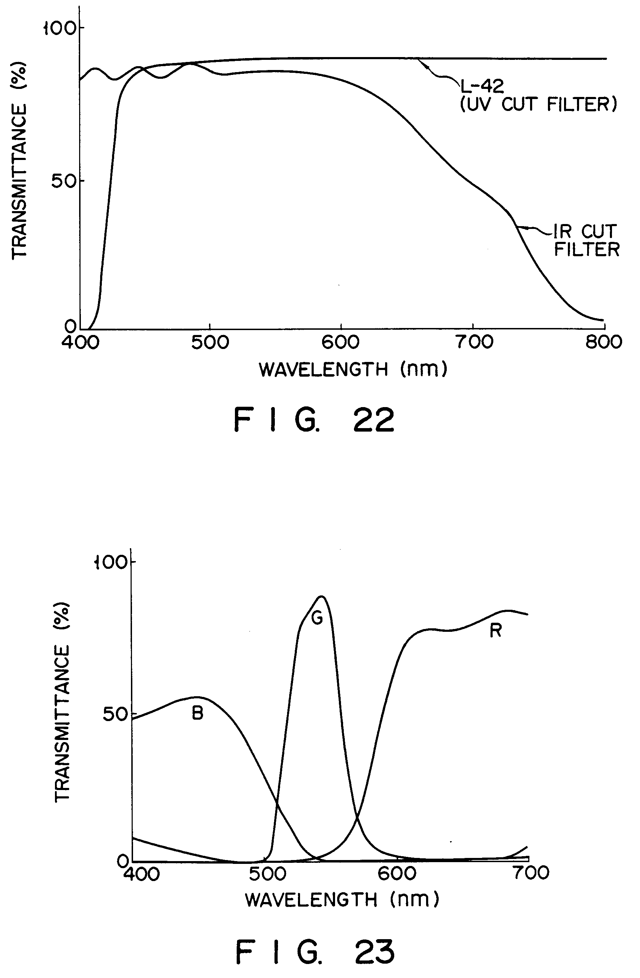

(2) A second embodiment using another method for setting the spectral characteristics in the ON state of the liquid crystal optical element will be described below. In this method, the tilt angle of the liquid crystal molecules is controlled so as to desirably set the spectral characteristics. The transmittance of light at respective wavelengths is changed upon changes in tilt angle of liquid crystal molecules, as shown in Fig. 21. The transmittance curve shown in Fig. 21 corresponds to a case wherein the wavelength is 550 nm, refractice indices and the like are $n// = 1.646$, $n_\perp = 1.499$, and $\Delta na = 0.147$. At this time, the first peak of transmitted light appears when liquid crystal molecules are inclined at 42.8°. Optical anisotropy $\Delta na = n// - n_\perp$ of the liquid crystal material is changed depending on the wavelength, as shown in Fig. 20. More specifically, at the short wavelength side, $\Delta na$ is large. Therefore, tilt angle $\phi$max of the liquid crystal molecules at which the maximum transmittance is obtained is small with respect to light in the short wavelength range and is large with respect to light in the long wavelength range. This means that when the liquid crystal molecules in the liquid crystal optical element are gradually inclined from the homeotropic alignment state, the transmittance of light having a short wavelength (blue) is increased, and then, the transmittance of light having a long wavelength (red) in increased. When the liquid crystal optical element is switched from the OFF state to the ON state, if tilt angle $\phi$ is smaller than $\phi$max near tilt angle $\phi$max at which the maximum transmittance can be obtained, the transmittance at the short wavelength side is high, and hence, transmitted light is colored in blue. If tilt angle $\phi$ is larger than $\phi$max, since the transmittance at the long wavelength side is high, transmitted light is colored in red. That is, when the tilt angle of the liquid crystal molecules for turning on the liquid crystal optical element is controlled, the spectral characteristics of the liquid crystal optical element can be changed. The tilt angle of the liquid crystal molecules can be controlled by selecting an electric field for obliquely aligning the liquid crystal molecules, i.e., a time during which high-frequency electric field fH is applied.

The optical characteristics of the liquid crystal optical element will be described hereinafter in more detail. The optical characteristics were examined using liquid crystal material 1 and liquid crystal material 2 shown in Table 5 below. These liquid crystal materials 1 and 2 have different optical anisotropies $\Delta na$, and have substantially identical dielectric characteristics $\Delta\epsilon$.

### Table 5 (Liquid crystal material 2)

| NI point | Viscosity | Optical | |
|---|---|---|---|
| 139.4°C | 88 cp at 25°C | n = 1.692 n = 1.507 | 544 nm at 23°C |

Table 6 below shows $\phi$max at which maximum transmittances of light components at respective wavelengths can be exhibited when liquid crystal materials 1 and 2 are used.

### Table 6 ($\phi$max at respective wavelength)

| Wavelength (nm) | $\phi$max (deg) | |
|---|---|---|
| | Liquid Crystal 1 | Liquid Crystal 2 |
| 650 | 48.3 | 43.5 |
| 550 | 42.0 | 38.5 |
| 450 | 33.7 | 33.2 |

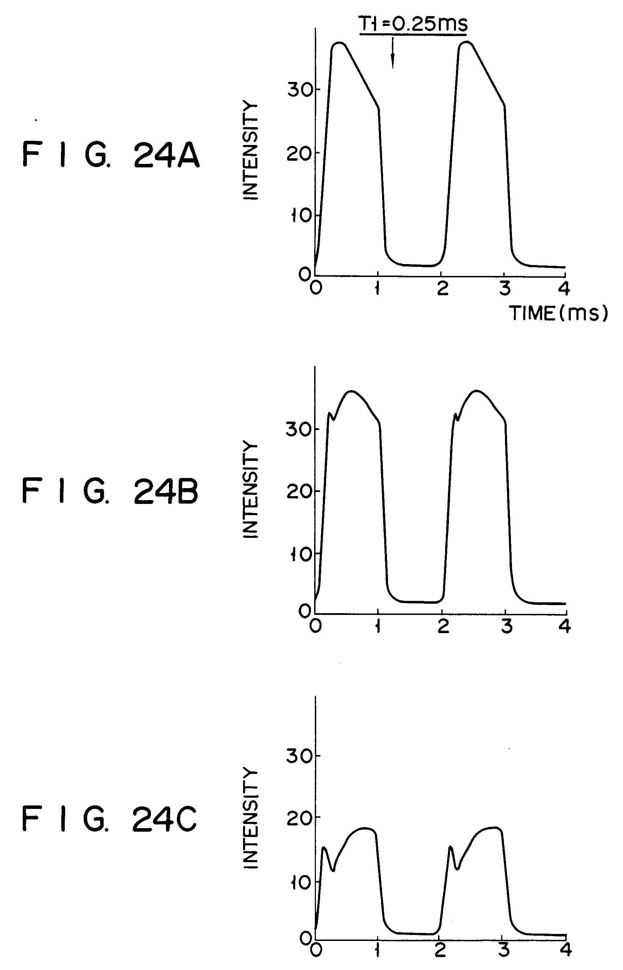

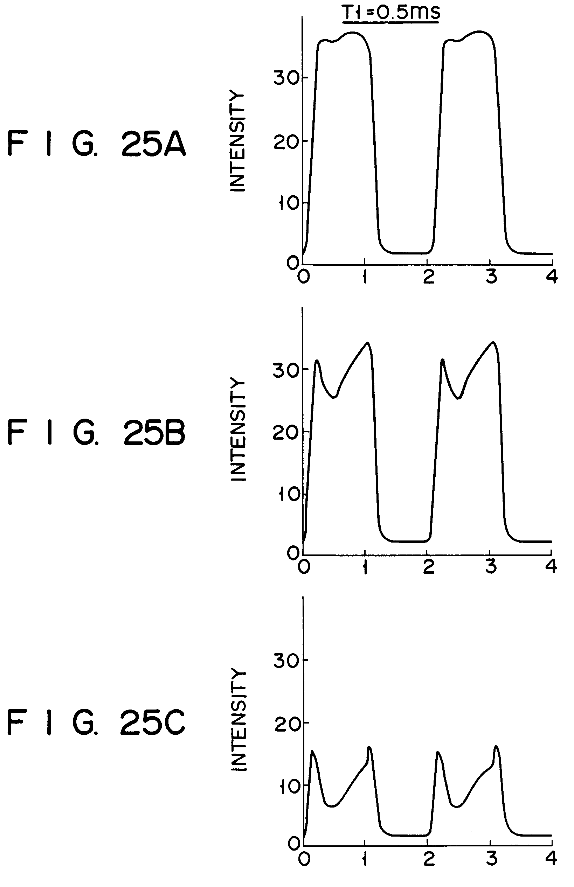

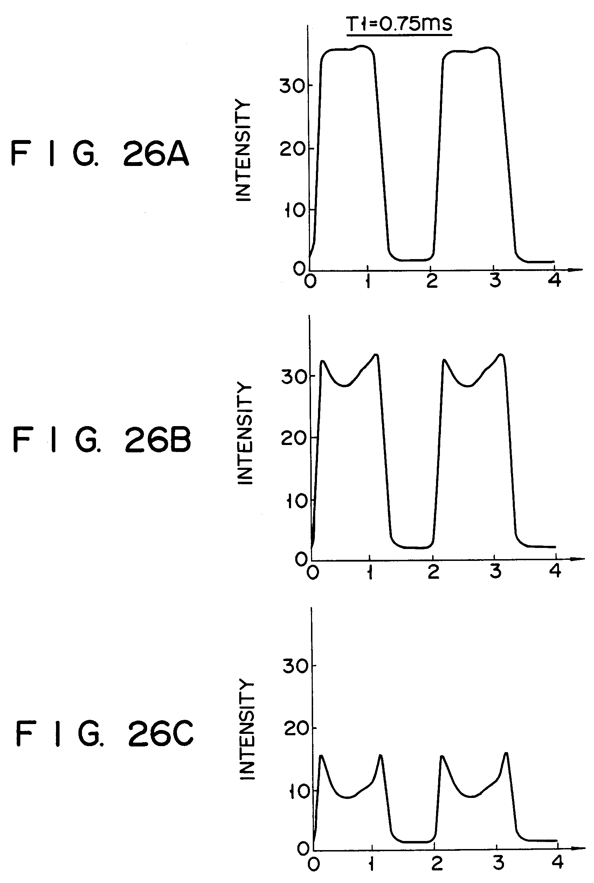

Liquid crystal material 1 was sealed in a liquid crystal cell having a liquid crystal layer with a thickness of 4.49 $\mu$m, and liquid crystal material 2 was sealed in a liquid crystal cell having a liquid crystal layer with a thickness of 4.28 $\mu$m. For the liquid crystal optical element using liquid crystal material 1, the transmission characteristics of R, G, and B light components are measured through color filters having spectral characteristics shown in Fig. 23 using a halogen lamp as a light source amd UV and IR cut filters having spectral characteristics shown in Fig. 22. An electric field applied to the liquid crystal material had an electric field waveform similar to the electric field shown in Fig. 13. Figs. 24A to 26C show response characteristics with respect to respective color light components when ON operation time T3 is respectively set to be 0.25 msec, 0.5 msec, and 0.75 msec. The electric field was repetitively applied in 2-msec cycles. As shown in Figs. 24A, 25A, and 26A, since $\phi$max of liquid crystal molecules is large with respect to a light component transmitted through the R filter, if T3 = 0.25 msec, when the non-electric field interval appears after liquid crystal molecules are inclined and the maximum transmitted light intensity is obtained upon application of high-frequency electric field fH, the liquid crystal molecules are returned to an original state due to the strong influence of the low-frequency electric field. For this reason, the light intensity is immediately decreased, and hence, the transmittance is low. If T3 = 0.5 msec and T3 = 0.75 msec, the tilt angle of the liquid crystal molecules inclined by the high-frequency electric field has substantially reached $\phi$max, and a bright state wherein the transmitted light intensity is saturated can be maintained. Therefore, the transmittance is high. As for a light component transmitted through the G filter, as shown in Figs. 24B, 25B, and 26B, since $\phi$max is smaller than that for the light component transmitted through the R filter, a sufficient brightness can be obtained with T3 = 0.25 msec, and the transmittance is high. However, when T3 = 0.5 msec and T3 = 0.75 msec, since the tilt angle of the liquid crystal molecules exceeds $\phi$max, the transmitted light intensity is decreased. For this reason, the transmittance is low. As for a light component transmitted through the B filter, as shown in Figs. 24C, 25C, and 26C, since $\phi$max is the smallest angle, the tilt angle of liquid crystal molecules already exceeds $\phi$max when T3 = 0.25 msec. Therefore, the transmittance is low. Furthermore, when T3 = 0.5 msec and T3 = 0.75 msec, the transmittance is further decreased.

15

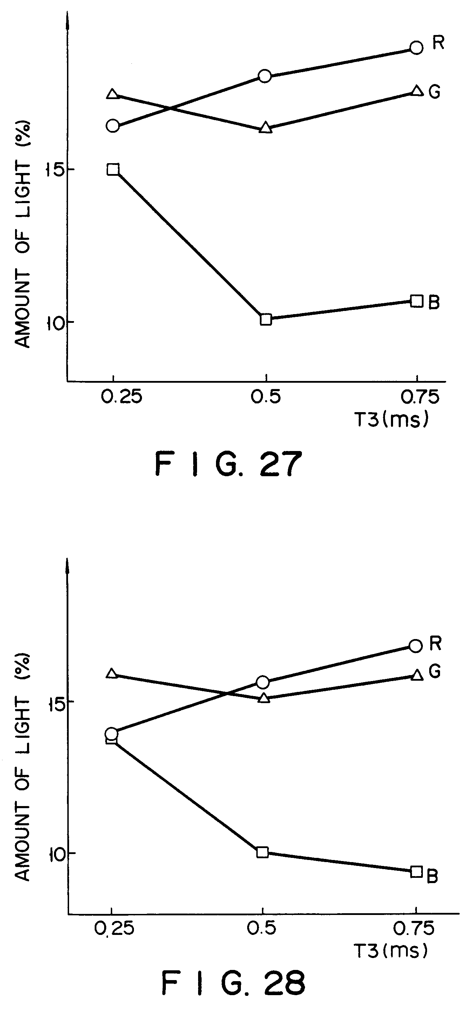

In the above-mentioned transmission characteristics, since the halogen lamp is used as the light source, its light emission intensity is strong at the long wavelength side. For this reason, light components transmitted through the G and R filters cannot be compared in terms of their intensities. Thus, the amounts of light transmitted through the color filters and the liquid crystal optical element within a single ON-OFF cycle (2 msec) must be compared in a ratio of amount of light (%) when the amount of light transmitted through only the color filters within a single ON-OFF cycle (2 msec) is given as 100%. The measurement values of the transmitted light intensities shown in Figs. 24A to 26C can be expressed in a ratio of amount of light (%), as shown in Figs. 27 and 28. Fig. 27 shows the amount of transmitted color light components as a function of the application time of the high-frequency electric field of the liquid crystal optical element using liquid crystal material 1 described above. Fig. 28 similarly shows the amount of light when liquid crystal material 2 described above is used. As can be seen from Figs. 27 and 28, the amount of a red light component transmitted through the R filter is increased as T3 is prolonged. The amount of a green light component transmitted through the G filter is not so varied even if T3 is prolonged. The amount of a blue light component transmitted through the B filter is decreased when T3 exceeds 0.5 msec. This means that if T3 is shortened, blueish light is transmitted, and if T3 is prolonged, redish light is transmitted. More specifically, the spectral characteristics of light transmitted through the liquid crystal optical element can be controlled in accordance with the application time of the high-frequency electric field.

In this liquid crystal optical element, when a fluorescent lamp whose light emission spectral intensity distribution has a peak value at the short wavelength side is used as a light source, T3 is shortened. When a halogen lamp and the like whose spectral distribution has a peak value at the long wavelength side is used as a light source, T3 is prolonged. In this manner, the peak of the spectral intensity distribution of light incident on the liquid crystal optical element is caused to substantially coincide with the spectral characteristics of the liquid crystal optical element, so that a high-contrast liquid crystal optical element with high transmitted light intensity can be obtained. The liquid crystal optical element is suitably used for an optical printing head of a liquid crystal optical printer. In this case, the spectral characteristics of the liquid crystal optical element are preferably caused to coincide with the peak of the spectral intensity distribution of the light source and/or the peak of the spectral sensitivity of a photosensitive drum.

C. An embodiment for preventing light leakage in the initial alignment state of the liquid crystal optical element of the present invention will now be described.

(1) The liquid crystal optical element shown in Fig. 1 is used as a micro shutter array in which a large number of opposing electrodes are arranged. In practice, the liquid crystal optical element includes a portion on which no electrodes are arranged to face each other in addition to a portion on which micro shutters are formed. Since this portion is not subjected to electric field application, it maintains initial alignment. In the micro shutter portion, it maintains the initial alignment when no electric field is applied. In the initial alignment state, tilt angle $\phi$ of liquid crystal molecules is 90° in equations (1) to (4) described above. That is, if optical anisotropy $\Delta na$ inherent to the liquid crystal material is applied, light determined by a product of the optical anisotropy $\Delta na$ of the liquid crystal material and the thickness of the liquid crystal layer is undesirably transmitted. The transmitted light corresponds to unnecessary leaked light.

The above light leakage was measured using liquid crystal cells having cell thicknesses (equal to the thickness of the liquid crystal layer) shown in Table 7 below using liquid crystal material 1 shown in Table 1 and liquid crystal material 2 shown in Table 5.

Table 7

| No. | Liquid Crystal Material | Cell Thickness (Thickness of Liquid Crystal Layer) (μm) | Δna·d (μm) |
|---|---|---|---|
| 1 | 1 | 4.15 | 0.564 |
| 2 | 1 | 5.19 | 0.706 |
| 3 | 1 | 6.15 | 0.836 |
| 4 | 2 | 6.21 | 1.136 |

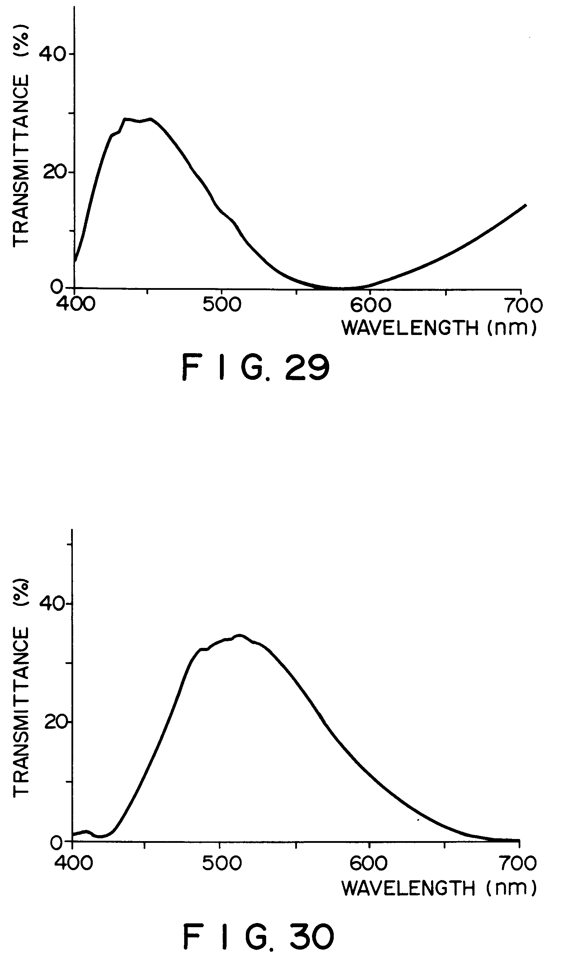

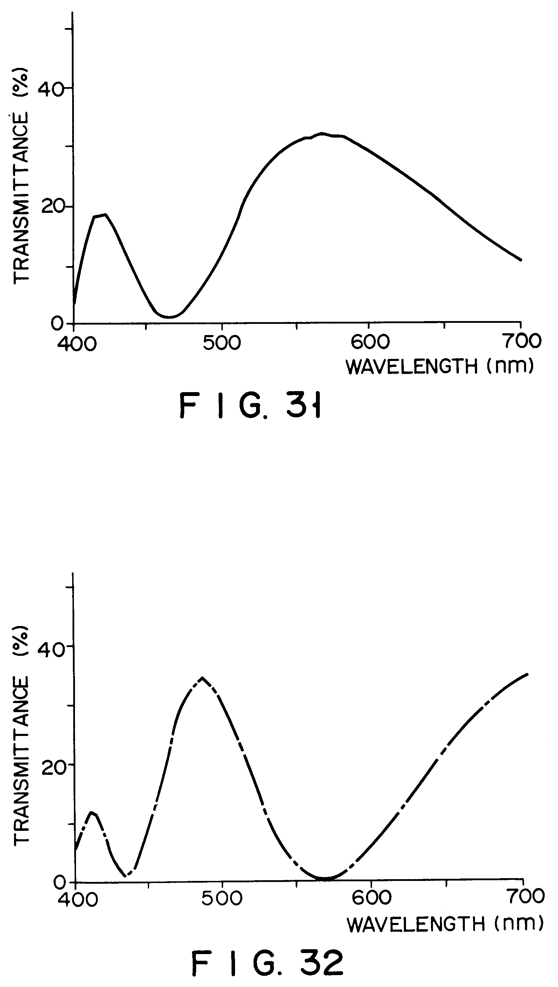

Figs. 29 to 32 show spectral characteristics of leaked light of the liquid crystal optical element. In these graphs, the wavelength $\lambda$ (nm) is plotted along the abscissa, and the transmittance (%) is plotted along the ordinate. In this case, a fluorescent lamp having a peak value of 543 nm in the spectral intensity distribution and a half-width of 20 nm was used as a light source. As can be seen from Figs. 29 to 32, the spectral characteristics can be greatly varied in accordance with a difference in $\Delta$na·d ($\Delta$na: optical anisotropy, $d$: thickness of liquid crystal layer).

In the liquid crystal optical element of the present invention, combination of optical anisotropy $\Delta$na of the liquid crystal material and cell thickness $d$ is arbitrarily selected, so that the spectral intensity distribution of incident light is different from a wavelength range in which the peak value of the spectral characteristics of this liquid crystal optical element appears, thereby preventing unnecessary light leakage.

More specifically, based on equation (1), the minimum transmittance in the non-electric field state is exhibited when the optical anisotropy satisfies the following relation:

$$\Delta na·d = (N + 1)\lambda \qquad (6)$$

$$(N = 0, 1, 2,...)$$

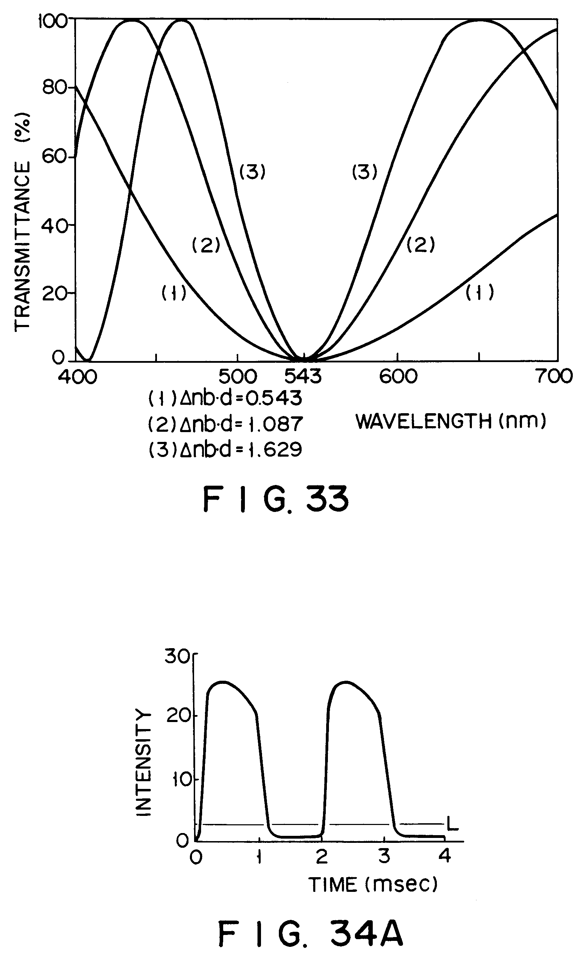

Fig. 33 shows this relationship when the wavelength of incident light is $\lambda$ = 543 nm. In Fig. 33, curves (1) to (3) show transmittances of light in the non-electric field state (1) when N = 0 and $\Delta$na·d = 0.543, (2) when N = 1 and $\Delta$na·d = 1.087, and (3) when N = 2 and $\Delta$na·d = 1.629, respectively. Note that in Fig. 33, the light transmittance when the relationship between $\Delta$na·d and wavelength $\lambda$ of incident light satisfies equation (5) is given as 100%. In Fig. 33, in order to minimize the transmittance of light having a wavelength of 543 nm, cell gap $d$ when liquid crystal material 1 shown in Table 1 is used corresponds to d = 4.0 μm in curve (1), d = 8.0 μm in curve (2), and d = 12.0 μm in curve (3). When cell gap $d$ is set to be 4.5 μm, $\Delta$na = 0.1207 in curve (1), $\Delta$na = 0.2416 in curve (2), and $\Delta$na = 0.362 in curve (3), respectively. In this manner, when the above-mentioned condition is satisfied, a transmittance when a wavelength of incident light is $\lambda$ = 543 nm becomes 0 regardless of the value of N. When the wavelength range exhibiting the peak value of the spectral intensity distribution of incident light is caused to substantially coincide with the wavelength range exhibiting a minimum transmission intensity in the spectral characteristics of the liquid crystal optical element, leaked light can be most effectly shielded. However, even if the above-mentioned wavelength ranges do not coincide with each other, the peak of the spectral intensity distribution of incident light is at least shifted from the wavelength range exhibiting the peak value of the transmitted light in the spectral characteristic of the liquid crystal optical element, so that light leakage can be reduced to a practical level.

Table 8 below shows the levels of brightness when the high-electric field was continuously applied to a liquid crystal material of each sample shown in Table 7.

17

Table 8

| Sample No. | Brightness Level Upon Continuous Application of fH |
|---|---|
| 1 | 4 |
| 2 | 16 |
| 3 | 23.5 |
| 4 | 8 |

Continuous application of high-frequency electric field fH for homogeneously aligning liquid crystal molecules represents an initial alignment state of a liquid crystal material. As is apparent from the spectral characteristics shown in Figs. 29 to 32, light leakage was considerable in the liquid crystal cells of sample Nos. 2 and 3, and light leakage was little in the liquid crystal cells of sample Nos 1 and 4. Therefore, the liquid crystal cells of sample Nos. 1 and 4 can be used in practical applications.

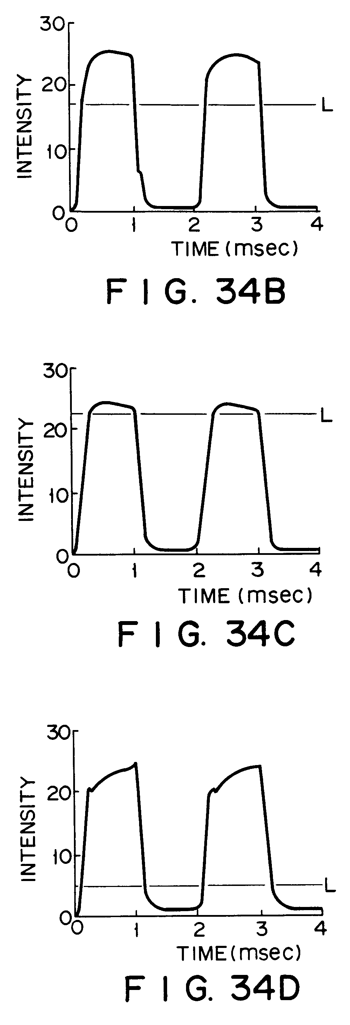

Figs. 34A to 34D show the response characteristics when an electric field having a waveform shown in Fig. 13a is repetitively applied and transmitted light levels in the case of continuous application of high-frequency electric field fH corresponding to the brightness in the initial alignment state, and Table 9 below shows the response speeds at that time. Note that in this case, a measurement temperature is 50°C.

Table 9

| No. | Rise Time ON | Decay Time OFF |
|---|---|---|
| 1 | less than 0.2 msec | less than 0.2 msec |
| 2 | less than 0.25 msec | less than 0.2 msec |
| 3 | less than 0.25 msec | less than 0.2 msec |
| 4 | less than 0.2 msec | less than 0.25 msec |

As for electric fields applied to these samples, high-frequency electric field fH is a rectangular wave signal at a frequency of 200 kHz, low-frequency electric field fL is a rectangular wave signal at a frequency of 4 kHz, voltage Vop is 25 V, ON operation time T1 and OFF operation time T2 are respectively 1 msec, and fH application time is 0.25 msec. A transmitted light intensity of 0% to 80% corresponds to rise time (ON response time) $\tau$ON and a transmitted light intensity of 100% to 10% corresponds to decay time (OFF response time) $\tau$OFF.

As shown in Figs. 34A to 34D, these samples have sufficiently high-speed response properties. However, when these samples are applied to optical shutters, light leakage level L in sample Nos. 2 and 3 shown in Figs. 34B and 34C is not so different from the shutter ON state. Therefore, if these samples Nos. 2 and 3 are used, a light shielding mask for preventing light leakage is used. As described above, when a light source whose light intensity has a peak value in the wavelength range of 543 nm is used, light leakage

18

can be preferably minimized when the thickness of the liquid crystal layer is 4.5 μm and Δna•d = 0.564 in the liquid crystal optical element in which liquid crystal material 1 is sealed, and when the thickness of the liquid crystal layer is 6.21 μm and Δna•d = 1.136 in the liquid crystal optical element in which liquid crystal material 2 is sealed.

As described above, even if Δna•d is changed, the response property and the ON/OFF shutter characteristics are not so largely changed. Therefore, if Δna•d of the liquid crystal material and the cell thickness d are adjusted in consideration of the spectral intensity distribution of the light source used, a liquid crystal optical element of excellent characteristics can be obtained. More specifically, the liquid crystal optical element has spectral transmission characteristics where the wavelength range of transmitted light in the homogeneous alignment state of the liquid crystal material is different from the light emission wavelength range of the light source, and optical anisotropy Δna of the liquid crystal material and thickness d of the liquid crystal layer are set so that the transmittance is decreased with respect to a light emission wavelength of the light source while the liquid crystal material sealed in the liquid crystal cell is homogeneously aligned, thereby reliably preventing light leakage.

A fourth embodiment of the present invention will now be described.

(2) A liquid crystal optical element will be described in which, in order to prevent light leakage as described above and to obtain a high-speed response property, liquid crystal molecules are obliquely aligned in the initial alignment state and a birefringence of the liquid crystal layer at that time is changed so that a wavelength range exhibiting a peak value of the light intensity distribution of the light source is different from that exhibiting the peak value of the transmitted light intensity.

As seen from equation (6) described above, in order to minimize light leakage, Δna of the liquid crystal material and thickness d of the liquid layer can be selected so that Δna•d = 0.543 when N = 0, Δna•d = 1.087 when N = 1, and Δna•d = 1.629 when N = 2. In these cases, in practice, the conditions of curve (1) (N = 0) wherein a change in transmittance upon change in wavelength is moderate are most preferably selected in consideration of temperature dependency of optical anisotropy of the liquid crystal and variations in cell gap d upon manufacture of elements.

However, since thickness d of the liquid crystal layer is determined in consideration of an appropriate intensity of an electric field applied to a liquid crystal and easy manufacture, in an element of d = 4.5 μm, Δna•d cannot satisfy the above condition. Therefore, in this liquid crystal optical element, light leakage from a portion to which no electric field is applied occurs. In this case, optical anisotropy Δna of a liquid crystal can be changed so that Δna•d satisfies the condition of equation (6). However, it is difficult to change the composition of the liquid crystal to adjust Δna•d.

In the embodiment of the present invention, the liquid crystal molecules are initially aligned in a tilt alignment state is which the molecules obliquely stand at pre-tilt angle α with respect to surfaces of substrates 11 and 12, thereby satisfying the condition of equation (6). Thus, light transmission in a non-electric field portion, i.e., a portion where liquid crystal molecules are in the initial alignment state, can be prevented to avoid light leakage. Pre-tilt angle α of the liquid crystal molecules that can prevent light leakage can be derived from equations (3) and (6). Pre-tilt angle α differs in accordance with liquid crystal materials used. For example, when liquid crystal material 1 shown in Table 1 and liquid crystal material 2 shown in Table 2 are used, pre-tilt angles α are as shown in Table 10 below when wavelength λ of incident light is 543 nm and the thickness of the liquid crystal layer is 4.5 μm.

## Table 10

| Liquid Crystal Material | Pre-tilt Angle α |
|---|---|
| 1 | 18.5° |
| 2 | 33.5° |

More specifically, in these liquid crystal materials 1 and 2, when the tilt angles of the liquid crystal molecules reach the values shown in Table 10, their birefringences of the liquid crystal layer can be respectively a predetermined value of Δnb•d, i.e., Δnb•d = 0.543 by the product with thickness d of the liquid crystal layer.

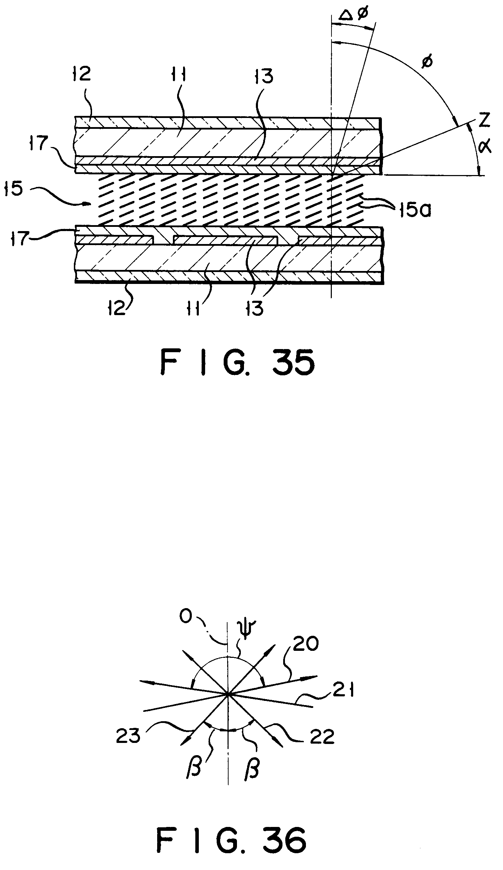

The detailed structure of the above-mentioned liquid crystal optical element will be described with reference to Fig. 35. The same reference numerals in Fig. 35 denote the same parts as in Fig. 1, and a detailed description thereof will be omitted.

Referring to Fig. 35, aligning-treated films 17 which are subjected to an aligning treatment for obliquely aligning liquid crystal molecules 15a to obliquely stand with respect to the surfaces of substrates 11 are provided on the opposing surfaces, i.e., electrode forming surfaces of substrates 11 over the entire regions surrounded by seal members (not shown). Liquid crystal material 15 forming an optical shutter is sealed between substrates 11.

Aligning-treated films 17 are prepared by an aligning treatment wherein organic aligning films such as polyimide films are rubbed. In this case, sintering conditions of an organic aligning material coated on the substrate surface, a film thickness of the aligning film, a strength of rubbing, and the like are selected so as to control the pre-tilt angle of liquid crystal molecules. The aligning-treated films can be prepared by a method wherein, aligning films are formed by a silane coupling agent and are subjected to an aligning treatment by rubbing, a method of SiO oblique evaporation, or a combination of the above methods. For example aligning-treated films 17 on substrates 11 are organic aligning films such as polyimide films, and the aligning films are rubbed in forward and reverse directions (parallel and opposite directions) as indicated by the arrow in Fig. 1, thereby forming aligning-treated films 17. In this case, liquid crystal molecules 15a are obliquely aligned to be parallel to the rubbing direction of aligning-treated films 17 and along the rubbing direction.

Liquid crystal molecules 15a of liquid crystal material 15 sealed between substrates 11 are aligned by films 17 so that they obliquely stand at pre-tilt angle $\alpha$ with respect to the surfaces of substrates 11, as shown in Fig. 35. Other structural details are the same as those in the liquid crystal optical element shown in Fig. 1.

In the liquid crystal optical element, as described above, aligning-treated films 17 on the surfaces of substrates 11 are aligning-treated films subjected to an aligning treatment so that liquid crystal molecules 15a are aligned to obliquely stand with respect to the surfaces of substrates 11. Therefore, the initial alignment state of liquid crystal molecules 15a can be set in an oblique alignment state in which molecules 15a obliquely stand at pretilt angle $\alpha$ with respect to the surfaces of substrates 11. For this reason, as compared to a conventional electrically controlled birefringence type liquid crystal optical element in which liquid crystal molecules are homogeneously aligned, a threshold voltage for driving a liquid crystal can be decreased, and hence, even if the drive voltage is not increased, the response property can be improved.

The fact that when liquid crystal molecules 15a are aligned to have pre-tilt angle $\alpha$, a threshold voltage for driving a liquid crystal is decreased, is described in "Applied Physics, Vol. 46, No. 12 (issued on October 1977) pp. 1179 -1185" published by Shadanhojin Oyobutsuri Gakkai. This literature also describes that if the pre-tilt angle is increased, a threshold voltage for driving the liquid crystal is decreased although it becomes unstable. A decrease in threshold voltage means that the element can be driven even if the drive voltage is low. Therefore, if the elements with and without a pre-tilt angle are driven at an identical voltage, the liquid crystal is driven at a sufficiently higher voltage than a minimum voltage necessary for its operation. Therefore, the shutter ON and OFF operations can be performed at high speed.

In the liquid crystal optical element described above, since aligning-treated films 17 on the surfaces of substrates 11 are prepared as described above, tilt directions of liquid crystal molecules 15a can be aligned by the aligning power of aligning-treated films 17 when liquid crystal molecules 15a are inclined from the homeotropic state to the initial alignment state upon application of a low-frequency electric field. Therefore, the tilt directions of liquid crystal molecules 15 can be uniformly determined to improve the transmittance upon shutter ON, thereby improving a contrast between the shutter ON and OFF states.

In the liquid crystal optical element described above, the thickness of the liquid crystal layer determined by a liquid crystal material used therein and a cell gap is determined as follows.

When the condition of equation (5) is satisfied, the maximum transmittance in the ON state of the liquid crystal optical element can be obtained, as described above. In this case, the larger optical anisotropy $\Delta na$ of the liquid crystal material is, or the larger cell gap $\underline{d}$ is, the smaller tilt angle $\Delta\phi$ of liquid crystal molecules 15a from the homeotropic alignment state until the maximum transmittance is obtained can become. Therefore, a higher response property can be expected.

The relationship among optical anisotropy $\Delta na$ of the liquid crystal material, cell gap $\underline{d}$, and tilt angle $\Delta\phi$ of liquid crystal molecules 15a when a maximum transmittance is obtained will be exemplified hereinafter.

Table 11 shows the measurement results of tilt angle $\Delta\phi$ of liquid crystal molecules when the maximum transmittance is obtained with respect to light of a wavelength of 543 nm for three liquid crystal optical elements respectively having cell gaps $\underline{d}$ of 4.0 $\mu$m, 4.5 $\mu$m, and 5.0 $\mu$m. In this case, the liquid crystal optical elements employ liquid crystal materials 1 and 2, and in the initial alignment state, pre-tilt angle $\alpha$ is 0. Note that optical anisotropies $\Delta na$ of liquid crystal materials 1 and 2 are respectively $\Delta na$ = 0.136 and $\Delta na$ = 0.183 (at 23°C, 589 nm).

<u>Table 11</u>

| Liquid Crystal Material | Cell Gap (nm) | $\Delta\phi$(deg) |
|---|---|---|
| 1 | 4.0<br>4.5<br>5.0 | 46.8<br>43.6<br>41.0 |
| 2 | 4.0<br>4.5<br>5.0 | 39.8<br>37.3<br>35.1 |

As can be seen from Table 11, from the comparison between the liquid crystal optical elements using two types of liquid crystal materials 1 and 2, an element employing liquid crystal material 2 having large optical anisotropy $\Delta na$ has smaller tilt angle $\Delta\phi$ of liquid crystal molecules with any cell gap when the maximum transmittance is obtained, i.e., in the shutter ON state. The response speed of the liquid crystal optical element becomes faster as tilt angle $\Delta\phi$ is decreased. If the elements have the identical optical anisotropy $\Delta na$, tilt angle $\Delta\phi$ becomes smaller as cell gap $\underline{d}$ becomes larger. Therefore, the element employing liquid crystal material 2 having larger cell gap $\underline{d}$ and larger optical anisotropy $\Delta na$ can respond at higher speed.

However, taking an electric field applied to the liquid crystal material into consideration, if cell gap $\underline{d}$ is increased, a electric field applied to the liquid crystal material is weakened. Therefore, the operating speed of the liquid crystal is decreased accordingly, and hence the response speed is lowered. In contrast to this, if cell gap $\underline{d}$ is small, the intensity of the electric field applied to the liquid crystal is increased. However, the element with small cell gap $\underline{d}$ has large tilt angle $\Delta\phi$ of liquid crystal molecules in the shutter ON state. Therefore, the response speed is low. The electric field applied to the liquid crystal material becomes too strong to adversely influence the liquid crystal. In particular, when the element is driven by the two-frequency addressing scheme as in this embodiment, if the electric field applied to the liquid crystal becomes too strong, a high-frequency hysteresis effect appears strongly, thus degrading the response property of the liquid crystal molecules.

Therefore, in order to obtain high-speed response of the liquid crystal optical element, cell gap $\underline{d}$ must be set so that tilt angle $\Delta\phi$ of liquid crystal molecules in the shutter ON state is small, and the intensity of the electric field applied to the liquid crystal can fall within an appropriate range. Cell gap $\underline{d}$ is, e.g., d = 4.5 $\mu$m.

When cell gap $\underline{d}$ is set to be 4.5 $\mu$m in order to improve the response speed, $\Delta n.d$ in the non-electric field state cannot satisfy the condition of equation (6) described above. For this reason, light leakage occurs. In this invention, as described above, cell gap $\underline{d}$ is selected in this manner, and liquid crystal molecules 15a are obliquely aligned to have pre-tilt angle $\alpha$ ($\alpha$ = 90° - $\phi$). Thus, light leakage from the liquid crystal optical element can be prevented, and at the same time, the liquid crystal optical element can have high response speed. In this case, the pre-tilt angle is preferably set to be 18.5° when liquid crystal material 1 is used, and to be 33.5° when liquid crystal material 2 is used.

Since the liquid crystal optical element of the present invention has the structure as described above, the response property can be improved although the threshold voltage for driving it is low. Since the tilt directions of liquid crystal molecules 15a are restricted by aligning-treated films 17 to be aligned, the transmittance in the shutter ON state can be increased, thereby improving the contrast. In addition, since pre-tilt angle a of liquid crystal molecules 15a is set as described above, light leakage in the non-electric field state can also be prevented. The liquid crystal optical element has very good response property, and is suitably applied to an electro-photographic printer. The printing speed can be increased, and a clear print with high contrast can be obtained. In the liquid crystal optical element of the above embodiment, since liquid crystal molecules 15a are obliquely aligned to have pre-tilt angle $\alpha$, a liquid crystal material having large $\Delta na$ can be used. When the liquid crystal material having large $\Delta na$ is used, since tilt angle $\phi$ from

the homeotropic alignment state until the shutter ON state can be reduced, the response property upon shutter ON can be further improved.

In the above embodiment, aligning-treated films 17 on the surfaces of substrates 11 are aligning-treated films which are subjected to an aligning treatment for obliquely aligning liquid crystal molecules with respect to the substrate surfaces. The aligning-treated films for obliquely aligning the liquid crystal molecules can be provided on either one of substrates. In the above embodiment, a two-frequency addressing nematic liquid crystal is employed as liquid crystal material 15. Instead, a positive dielectric anisotropy nematic liquid crystal can be used as liquid crystal material 15, and a DC or AC electric field is applied across electrodes or is cut off to effect the shutter ON or OFF state. In this case, the same effect as in the above embodiment can be obtained.

D. The liquid crystal optical element of the present invention described above has the basic structure shown in Figs. 1 and 2. However, the present invention is not limited to this structure. For example, an aligning treatment direction of the aligning-treated films formed on substrates 11 and/or an angle defined by the aligning treatment direction and the direction of the polarizing axis of the polarizing plate can be arbitrarily modified within the range of the following conditions.

(1) A modification of the embodiment of the present invention will be described with reference to a case wherein the aligning treatment direction is changed. In Figs. 1 and 36, one of aligning-treated films 14 on a pair of opposing substrates is subjected to an aligning treatment in a direction indicated by arrow 20, and the other is subjected to an aligning treatment in a direction indicated by arrow 21. Aligning treatment directions 20 and 21 are determined to intersect at intersectional angle $\psi$ of 180° to 150°. Polarizing axis direction 22 of one of a pair of polarizing plates 12 and polarizing axis direction 23 of the other plate 12 are substantially perpendicular to each other, and at least polarizing axis 22 intersects bisector 0 of intersecting angle $\psi$ of directions 20 and 21 at angle $\underline{\beta}$.

A two-frequency addressing nematic liquid crystal material 15 is filled between a pair of substrates 11, and liquid crystal molecules of this liquid crystal layer are aligned to be slightly twisted (twist angle is 180° - $\psi$) in accordance with directions 20 and 21 of films 14.

When the liquid crystal optical element adopts liquid crystal material 1 described above, a rise time until the liquid crystal molecules are obliquely aligned to establish the shutter ON state and a decay time until the shutter OFF state is established are respectively about 0.2 msec, and thus a very good response property can be provided.

The transmitted light intensities in shutter ON and OFF states and the contrast (a ratio of transmitted light intensities of shutter ON and OFF states) of a liquid crystal optical element in which intersecting angle $\psi$ of directions 20 and 21 of films 14 of substrates 11 was set to be 180° (the aligning treatment directions of the aligning films are parallel to and opposite to each other) and liquid crystal optical elements in which intersecting angle $\psi$ of directions 20 and 21 was set to be 170° and 160° were measured at two atmospheric temperatures of 55°C and 45°C. The measurement results are shown in Table 12 below. Angle $\underline{\beta}$ was about 45° in this case, and a fluorescent lamp having an emission peak at a wavelength of 543 nm was used as light source.

## Table 12

| No. | $\psi$ | Cell Gap ($\mu$m) | 55°C | | | | 45°C | | | |
|---|---|---|---|---|---|---|---|---|---|---|
| | | | Transmitted Light Intensity | | Contrast | | Transmitted Light Intensity | | Contrast | |
| | | | ON | OFF | | | ON | OFF | | |
| 1 | 180° | 4.68 | 42 | 0.9 | 46.7 | | 37.5 | 0.9 | 41.7 | |
| 2 | 170° | 4.48 | 43.5 | 0.825 | 52.7 | | 38.5 | 0.875 | 44.0 | |
| 3 | 160° | 4.50 | 43 | 0.7 | 61.4 | | 37.5 | 0.7 | 53.6 | |

$$(\text{Contrast} = \frac{\text{transmitted light intensity upon shutter ON}}{\text{transmitted light intensity upon Shutter OFF}})$$

As can be seen from Table 12, the liquid crystal molecules are aligned to be slightly twisted, so that the transmitted light intensity upon shutter ON can be increased, and the intensity of light leakage upon shutter OFF can be decreased, resulting in an improved light shielding property. Contrast between shutter ON and OFF states can also be increased. However, if angle becomes smaller than 150°, the twist angle of the liquid crystal molecules is increased, thus degrading the response property. In addition, the contrast is also decreased. Therefore, $\psi$ is preferably selected to fall within the range of 150° to 180°. In Table 12, cell gaps ( a gap for filling a liquid crystal between substrates 11) of the respective liquid crystal optical elements are different from each other. The differences in cell gaps correspond to errors caused in the process of manufacture of the liquid crystal optical elements, and substantially do not influence the transmitted light intensity.

As described above, the liquid crystal molecules are aligned to be slightly twisted, so that the liquid crystal optical element can improve the transmittance in the shutter ON state, and can also improve the light shielding property in the shutter OFF state, thereby improving the contrast between the shutter ON and OFF states. Therefore, the liquid crystal optical element has not only good response property but also high contrast between the shutter ON and OFF states.

(2) Another modification will now be described using Figs. 36, 37, and 38 with reference to a case wherein angle $\beta$ defined by the bisector of the intersecting angle of directions 20 and 21 of films 14 and polarizing axis 22 of one polarizing plate 12 is slightly shifted from 45°.

In this liquid crystal optical element, polarizing axes 22 and 23 of a pair of polarizing plates 12 are arranged to be perpendicular to each other. When angle $\psi$ of aligning treatment directions of aligning-treated films 14 is determined to be 180° (parallel to and opposite to each other), polarizing axis 22 of one polarizing plate is arranged to intersect the direction at an angle falling within the range of 35° to 45°. Alternatively, when angle $\psi$ formed by aligning treatment directions is not 180°, polarizing axis 23 is arranged to intersect bisector 0 of angle $\psi$ at an angle falling in the above range.

In a case wherein liquid crystal material 1 was sealed in liquid crystal cells having the above structure and different cell thicknesses, and angle $\beta$ was set at 40°, 35°, and 30°, transmittances in the initial alignment state and their response properties were as shown in Tables 13 and 14. In this case, the wavelength of light used in measurement was 543 nm and angle $\psi$ defined by the aligning treatment directions was 180°.

## Table 13

| No. | Cell Thickness (μm) | Angle β | Transmittance (%) |
|-----|---------------------|---------|-------------------|
| 1 | 4.15 | 45 | 3.21 |
| 2 | 4.15 | 40 | 3.14 |
| 3 | 4.15 | 35 | 2.76 |
| 4 | 4.15 | 30 | 2.50 |
| 5 | 4.68 | 45 | 16.70 |
| 6 | 4.68 | 40 | 15.55 |
| 7 | 4.68 | 35 | 14.14 |
| 8 | 4.68 | 30 | 12.89 |

## Table 14

| No. | Angle $\beta$ | Cell Thickness ($\mu$m) | 55°C | | | 45°C | | |
|---|---|---|---|---|---|---|---|---|
| | | | LON | LOFF | CR | LON | LOFF | CR |
| 1 | 45 | 4.15 | 44 | 0.55 | 80.0 | 38 | 0.575 | 66.1 |
| 2 | 40 | 4.15 | 44 | 0.6 | 73.3 | 38.5 | 0.6 | 64.2 |
| 3 | 35 | 4.15 | 44 | 0.575 | 76.5 | 36.0 | 0.55 | 65.5 |
| 4 | | | | | | | | |
| 5 | 45 | 4.68 | 42 | 0.9 | 46.7 | | | |
| 6 | 40 | 4.68 | 45.5 | 0.95 | 47.9 | | | |
| 7 | 35 | 4.68 | 39.5 | 0.875 | 45.1 | | | |
| 8 | 30 | 4.68 | 36.0 | 0.9 | 40.1 | | | |
| 9 | 45 | 5.19 | 43 | 0.9 | 47.8 | 37.5 | 0.9 | 41.7 |
| 10 | 40 | 5.19 | 43.5 | 0.95 | 45.8 | 38 | 0.95 | 40.0 |
| 11 | 35 | 5.19 | 42 | 0.95 | 44.2 | 35.5 | 0.9 | 39.4 |

In this case, the electric field applied to the liquid crystal material has a waveform in which high-frequency electric field fH and low-frequency electric field fL alternately appear upon shutter ON/OFF operation, as shown in Fig. 13A. High-frequency electric field fH is 200 kHz, low-frequency electric field fL is 4 kHz, voltage VOP is 25 V, ON and OFF operation times T1 and T2 are respectively 1 msec, and application time T3 of electric field fH is 0.25 msec. A time during which the transmitted light intensity reaches 0 to LON is given as rise time (ON response time) $\tau$On and a time during which the transmitted light intensity reaches LON to LOFF is given as decay time (OFF response time) $\tau$OFF, and a ratio of transmitted light intensities LON and LOFF is given as contrast CR.

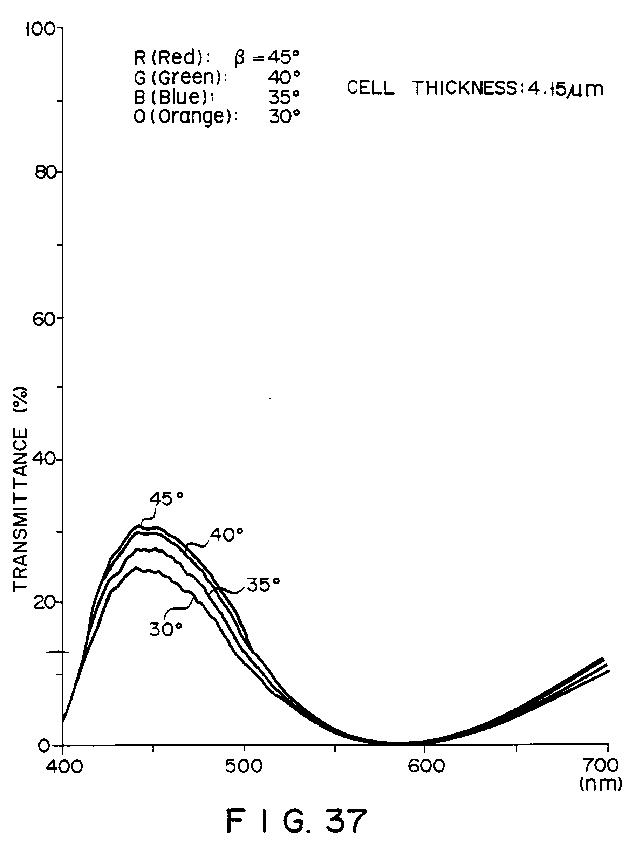

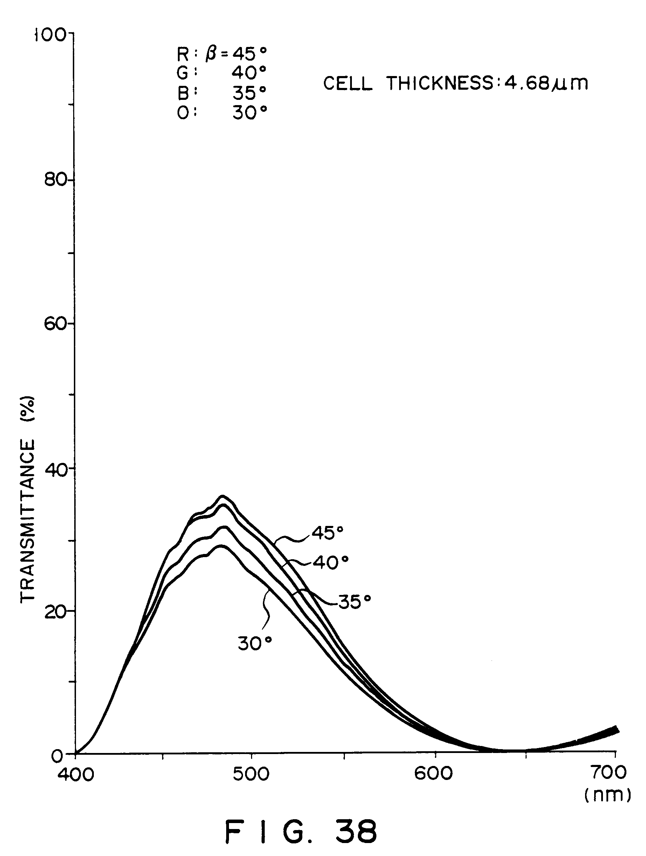

Fig. 37 shows the spectral characteristics of transmitted light in the liquid crystal optical element having a cell thickness of 4.15 $\mu$m shown in Table 13 and Fig. 38 shows the spectral characteristics of transmitted light in the liquid crystal optical element having a cell thickness of 4.68 $\mu$m.

As can be seen from Table 13 and Figs. 37 and 38, as compared to a liquid crystal optical element in which angle $\beta$ defined by polarizing axes 22 and 23 of polarizing plates 12 and aligning treatment directions 20 and 21 of the liquid crystal molecules is 45°, in the optical elements having angle $\beta$ other than 45°, the spectral characteristic curve has the identical tendency. However, an element having smaller angle $\beta$ has a

smaller transmittance, and when angle $\beta$ is 30°, the transmittance is further decreased.

However, taking the transmittance in the ON state shown in Table 14 into consideration, if angle $\beta$ is 30°, brightness is decreased by 20% or more, and hence the contrast (CR = LON/LOFF) is decreased. For this reason, angle $\beta$ preferably falls within the range of 35° to 45°. Within this range of angle $\beta$, if the angle defined by polarizing axes 22 and 23 of polarizing plates 12 and directions 20 and 21 is shifted from 45°, light leakage in the initial alignment state can be eliminated, and it is very advantageous for a shutter.

As is apparent from Table 14, a decrease in transmitted light intensity caused by difference in angle $\beta$ in the shutter ON state is very small, and the transmitted light intensity in the shutter OFF state does not depend on angle $\beta$. The measurement values shown in these tables reveal that the temperature dependency of the characteristics in the shutter OFF state is small.

In this manner, with the liquid crystal optical element described above, if angle $\beta$ defined by polarizing axes 22 and 23 of polarizing plates 12 and aligning directions 20 and 21 of the liquid crystal molecules is set to fall within the range of 45° to 35°, the contrast (CR = LON/LOFF) between the shutter ON and OFF states is high, and a transmittance of a portion to which no electric field is applied is low. Therefore, light leakage in a portion other than the shutter portion can be eliminated, and it is very advantageous for an optical shutter.

E. A fifth embodiment of the present invention will now be described.

The liquid crystal optical element described above is suitably applied to an optical write head of an electro-photographic printer. The optical write head radiates light emitted from a light source onto a photosensitive body as micro spots, and an electrostatic latent image corresponding to an arbitrary image is formed by a large number of dots upon radiation of micro spots.

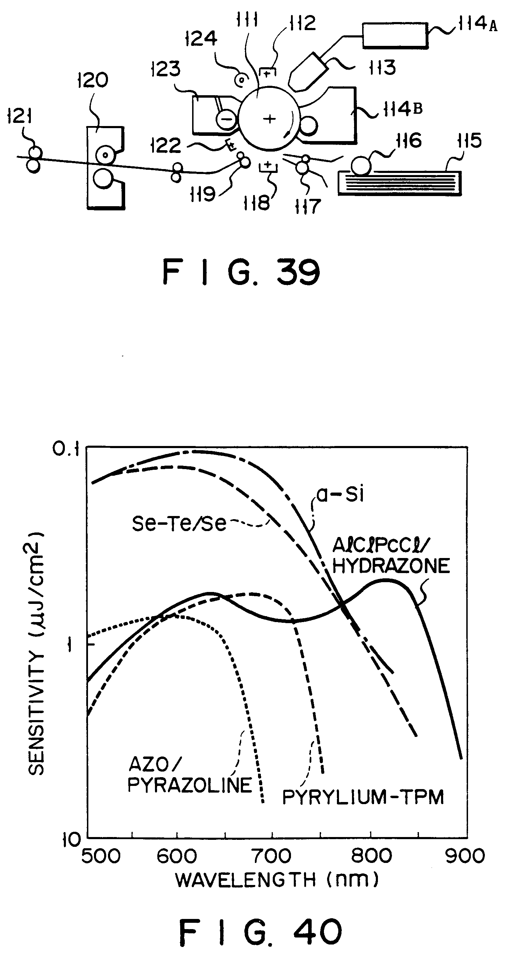

A liquid crystal optical printer wherein a liquid crystal optical element of the present invention is applied to an electro-photographic printer will be described with reference to Figs. 39 and 40. Referring to Fig. 39, the liquid crystal optical printer has photoconductive photosensitive drum 111, charger 112 for uniformly charging the surface of drum 111, and optical recording unit 113 for performing optical recording on the surface of drum 111. Unit 113 is constituted by a light source, a liquid crystal shutter, and a focusing lens, and is driven by recording controller 114A for controlling timings based on recording information such as an image. Unit 113 radiates light onto the surface of drum 111 to erase the charges on the irradiated portion on the surface of drum 111, thereby recording information. An electrostatic latent image is formed on the surface of drum 111 by an information recording operation of unit 113, and is developed by developer 114B to obtain a toner image.

Recording paper sheet 115 is fed by paper feed roll 116, and is temporarily stopped by standby rolls 117. Thereafter, paper sheet 115 is fed to transcribing unit 118 in synchronism with the toner image on the surface of drum 111. The toner image on the surface of drum 111 is transribed to paper sheet 115 by transfer unit 118. Paper sheet 115 is separated from drum 111 by separating unit 119, the toner image thereon is fixed by fixer 120, and then sheet 115 is delivered by deliver rollers 121. After the toner image is transferred to sheet 115, toner charges on drum 111 are neutralized by discharger 122 . Thereafter, residual toner thereon is cleaned by cleaner 123 and the surface charge is neutralized by eraser 124.

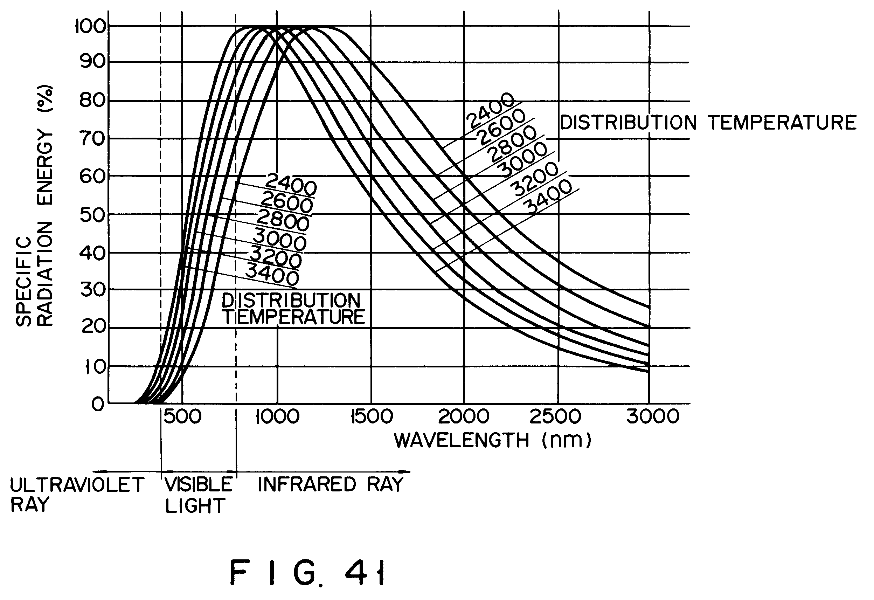

Drum 111 is formed of an inorganic photosensitive material such as amorphous si(a-Si), Se-Te/Se, or the like, or an organic photosensitive material, and the spectral sensitivities of these photosensitive materials are shown in Fig. 40. The light source of optical recording unit 113 comprises a fluorescent lamp which has a peak value of a light emission intensity at a wavelength of 543 nm or it comprises a halogen lamp. The halogen lamp has a peak value of the light emission intensity at the long wavelength side, and its typical energy distribution is shown in Fig. 41.

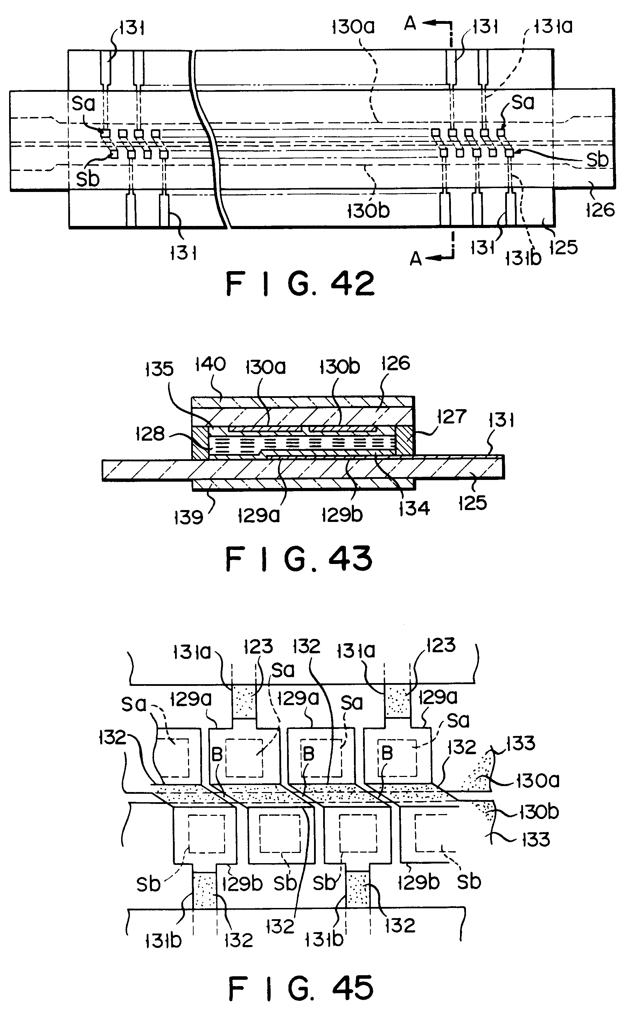

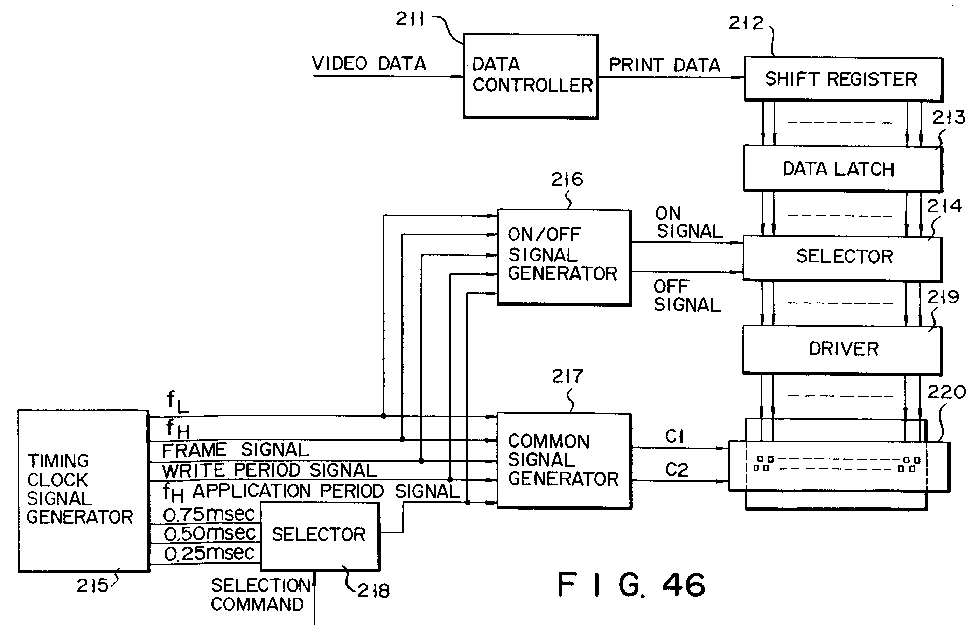

The liquid crystal shutter provided to optical recording unit 113 will now be described in detail with reference to Figs. 42 to 45. Referring to Figs. 42 to 45, substrates 125 and 126 comprise glass plates having a thickness of 0.7 mm. A pair of substrates 125 and 126 are adhered to each other to have a predetermined gap therebetween by seal member 127, and two-frequency addressing liquid crystal materials 128 is sealed therebetween. A large number of signal electrodes 129a,... and 129b,... are aligned in two arrays on the entire inner surface of one lower substrate 125 (segment substrate) of substrates 125 and 126. Two elongated common electrodes 130a and 130b corresponding to the opposing signal electrode arrays 129a and 129b of lower substrate 125 are formed on the inner surface (opposite to lower substrate 125) of upper substrate 126. Signal electrodes 129a and 129b and common electrodes 130a and 130b are transparent electrodes formed of a transparent conductive material such as indium-tin oxide. Portions at which signal electrodes 129a and 129b and common electrodes 130a and 130b face each other constitute shutter portions Sa and Sb for transmitting light therethrough. One signal electrode array 129a is arranged to be shifted from the other signal electrode array 129b by a 1/2 pitch. Therefore, shutter portions Sa and Sb are arranged in two arrays to be shifted by 1/2 pitch from each other. Adjacent signal electrodes 129a and 129b are commonly connected to be shifted by 1/2 pitch from each other. Signal electrodes 129a and 129b are alternately connected to driver connected terminals 131 aligned on the two side edge portions of lower substrate 125 through lead wire portions 131a and 131b. Nontransparent metal films 132 and 133 (Fig. 45) are deposited on the surfaces of common connected portions of signal electrodes 129a and 129b, lead wire portions 131a and 131b, driver connected terminals 131, and common electrodes 130a and 130b, except for portions corresponding to shutter portions Sa and Sb, in order to decrease the electrical resistance of the electrodes and to restrict the areas of shutter portions Sa and Sb.

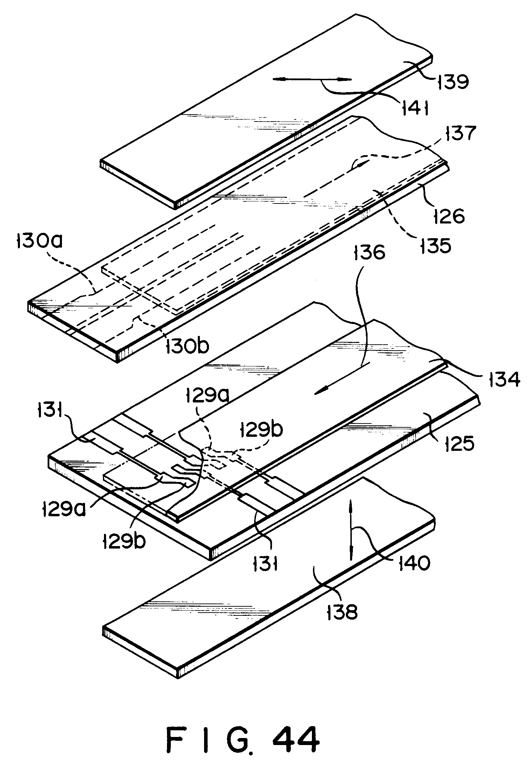

Aligning-treated films 134 and 135 which are subjected to an aligning treatment to align liquid crystal molecules in a predetermined direction with respect to the surfaces of substrates 125 and 126 are provided on the opposing surfaces, i.e., electrode forming surfaces of substrates 125 and 126 over the entire regions surrounded by seal members 127. Aligning-treated films 134 and 135 are prepared such that organic insulating films such as polyimide films are formed and thereafter are subjected to a rubbing treatment. The direction of the rubbing treatment corresponds to the directions indicated by arrows 136 and 137 in Fig. 44, which form an angle of 180°.

A pair of polarizing plates 138 and 139 are adhered to the outer surfaces of substrates 125 and 126, and light-shielding printing is performed on the outer surface of one polarizing plate (e.g., upper polarizing plate 139) arranged on the outer surface of the substrate at the light exit side, except for an alignment area of shutter portions Sa and Sb.

Of these polarizing plates 138 and 139, for example, the polarizing axis of lower polarizing plate 138 adhered to the outer surface of lower substrate 125 is arranged to intersect the rubbing direction at about 45°, as indicated by arrow 140 in Fig. 44. Upper polarizing plate 139 adhered to the outer surface of upper substrate 126 is arranged so that its polarizing axis intersects the polarizing axis of lower polarizing plate 138 as indicated by arrow 141 of Fig. 44.

Liquid crystal material 1 described above is sealed between the pair of substrates. Liquid crystal material 1 is a liquid crystal compound having two-frequency addressing characteristics.

In the liquid crystal optical element using the two-frequency addressing nematic liquid crystal material, the ON/OFF operations of shutter portions Sa and Sb are controlled by a two-frequency signal including high- and low-frequency electric fields. When the low-frequency electric field is applied across signal electrodes 129a and 129b and common electrodes 130a and 130b, the liquid crystal molecules of liquid crystal material 128 are homeotropically aligned with respect to the surfaces of substrates 125 and 126 and shutter portions Sa and Sb are set in the OFF state which does not to allow light transmission. When the high-frequency electric field is applied in this state, the liquid crystal molecules are to return to the initial alignment state (homogeneous alignment) due to inversion of the dielectric anisotropy. When the liquid crystal molecules begin to return from the homeotropic state to the initial alignment state, the birefringence of the liquid crystal layer is gradually changed upon change in tilt angle of liquid crystal molecules. In this case, a bright state can be established near a specific tilt angle. The application time of the high-frequency electric field is set so that application of the high-frequency electric field is cut off at that time, and this state is used as a shutter ON state In this manner, shutter portions Sa and Sb are opened/closed, thereby controlling light transmission.

When the liquid crystal optical printer with the above structure performs high-speed printing, the intensity of light transmitted through the individual micro shutters of the liquid crystal optical element must be high. For this purpose, the liquid crystal shutter must have a high transmittance with respect to light emitted from the light source and a high sensitivity of the photosensitive body with respect to this light. More specifically, the wavelength range exhibiting the peak value of the spectral characteristics of the liquid crystal shutter must substantially coincide with at least one of the wavelength range exhibiting the peak value of the spectral intensity distribution of the light source and the wavelength range exhibiting the peak value of the spectral sensitivity of the photosensitive body. In order to cause the spectral characteristics to substantially coincide with each other, a combination of optical anisotropy $\Delta na$ of the liquid crystal material and thickness $\underline{d}$ of a liquid crystal layer is selected so that product of birefringence $\Delta nb$ and thickness $\underline{d}$ of a liquid crystal layer can be a predetermined value with respect to light of a specific wavelength. In this case, when a fluorescent lamp having a peak value at $\lambda = 543$ nm is used as a light source and liquid crystal material 1 is used as the liquid crystal material, thickness $\underline{d}$ of the liquid crystal layer is preferably set to be 4.5 $\mu$m.

In the spectral characteristics of the above-mentioned liquid crystal optical device, when a tilt angle of liquid crystal molecules is smaller than that angle where the maximum transmitted light intensity is obtained, the transmittance of light components at the short wavelength side is high. On the other hand, if the tilt angle is large, the transmittance of light components at the long wavelength side becomes high. Therefore, the tilt angle of the liquid crystal molecules can be controlled so that the spectral characteristics of the liquid crystal optical element can be changed. The tilt angle of the liquid crystal molecules can be given by a time during which high-frequency electric field fH is applied to the liquid crystal material. Therefore, the spectral characteristics of the liquid crystal optical element can be determined in accordance with the application time of the high-frequency electric field.

In the liquid crystal optical element, the aligning film treatment directions of the aligning-treated film formed on the inner surfaces of the opposing substrates can be set to fall within the range of 150° to 180°. An angle formed by the aligning treatment directions and polarizing axes of the polarizing plates can be set to fall within the range of 35° to 45°. In this case, the operation characteristics of the micro shutters can be very good.

In order to prevent light leakage in the initial alignment state of the liquid crystal optical element, when liquid crystal material 1 is used as the liquid crystal material and a fluorescent lamp having a light emission peak at a wavelength of 543 nm is used as a light source, thickness $\underline{d}$ of the liquid crystal layer is preferably set to be 4 $\mu$m, 8 $\mu$m, or 12 $\mu$m.

In particular, in the liquid crystal optical element shown in Fig. 45, portions B at which common electrodes on one substrate do not oppose segment electrodes on the other substrate are inevitably present. No electric field is applied to portions B, and these portions are maintained in the initial alignment state. Therefore, in this liquid crystal optical element, light leakage from portions B degrades the contrast. In order to solve this problem, light leakage in the initial alignment state is prevented as described above, so that the contrast between the liquid crystal shutter ON/OFF operations can be improved. In this case, when liquid crystal material 1 is used as the liquid crystal material and fluorescent lamp having a light emission peak of 543 nm is used as a light source, the thickness of the liquid crystal layer is preferably set to be 4 $\mu$m, 8 $\mu$m, or 12 $\mu$m, or 4.15 $\mu$m. When liquid crystal material 2 is used, the thickness of the liquid crystal layer is preferably set to be 6.21 $\mu$m.

Light leakage can also be prevented by obliquely aligning the liquid crystal molecules in the initial alignment state. In this case, if a fluorescent lamp having a light emission peak of 543 nm is used as a light source and liquid crystal material 1 is used as the liquid crystal material, the pre-tilt angle of liquid crystal molecules is preferably set to be 18.5°. When liquid crystal material 2 is used, the pre-tilt angle of liquid crystal molecules is preferably set to be 33.5°.

The liquid crystal optical element with the above structure is driven by a circuit shown in Fig. 46. Referring to Fig. 46, data controller 211 converts video data scanned by a data processor (not shown) or an optical system (not shown) into serial print data, and sends it to shift register 212. Shift register 212 fetches data from controller 211 while sequentially shifting the data. When data for one line is fetched, the fetched data is latched in data latch 213, and is then transferred to selector 214.

Timing clock signal generator 215 generates low-frequency signal (rectangular wave) fL at a frequency, e.g., 4 kHz, lower than crossover frequency fc, high-frequency signal (rectangular wave) fH at a frequency, e.g., 200 kHz, higher than frequency fc, a frame signal which is inverted for each frame, and a write period signal which goes to high level in the first half of the frame signal and goes to low level in the second half thereof. Generator 215 sends these signals to ON/OFF signal generator 216 and common signal generator 217. Generator 215 generates clock signals having pulse widths of 0.75 msec, 0.50 msec, and 0.25 msec in synchronism with the leading edge of the write period signal, and sends them to selector 218. Selector 218 selects the clock signals from generator 215 in accordance with selection command data supplied from an external circuit, and outputs the selected signal to generators 216 and 217 as an fH application period signal.

Generator 216 generates ON and OFF signals by combining signals from generator 215 and selector 218, and outputs them to selector 214. Selector 214 selects the ON or OFF signal from generator 216 in accordance with the data latched by data latch 213, and outputs the selected signal to driver 219. Driver 219 supplies a drive signal to the signal electrodes of liquid crystal shutter 220 having the above structure in accordance with the signal from selector 214. Generator 217 generates common signals C1 and C2 on the basis of the signals from generators 215 and 218, and supplies them to the common electrodes of shutter 220.

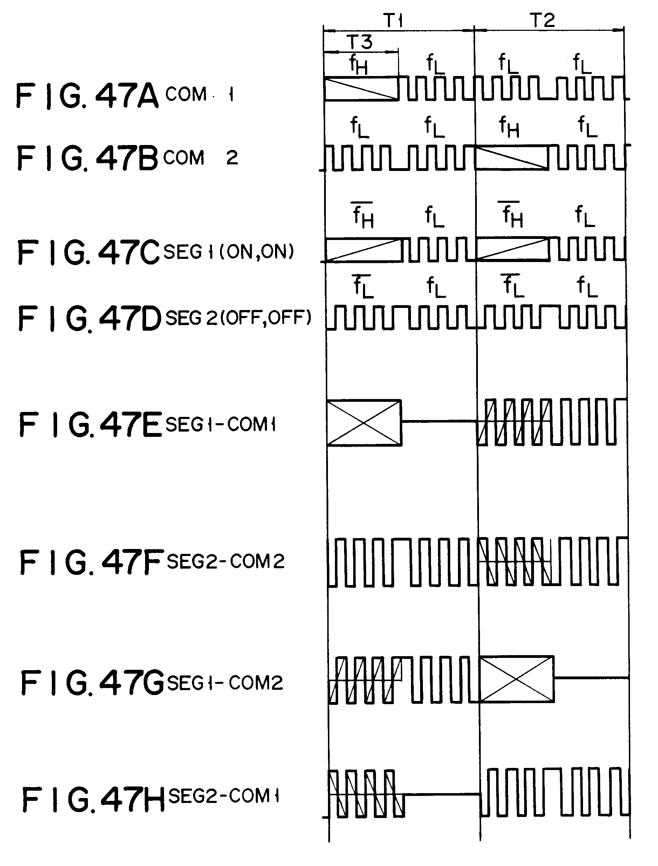

With this driver circuit, the signal and common electrodes of liquid crystal shutter 220 receive the following signals, and shutter 220 is time-divisionally driven at 1/2 duty. Detailed drive voltage waveforms will be described hereinafter with reference to Figs. 47 to 49. Referring to Fig. 47, reference symbol Com1 denotes a common signal applied to one common electrode 130a. and Com2, a common signal applied to the other common electrode 130b. These common signals alternatively select common electrodes 130a and 130b during a write cycle. Each write cycle is set to be 2 msec. During first period T1, common electrode 130a is selected, and during second period T2, common electrode 130b is selected. Common signal Com1 serves as 200 kHz high-frequency voltage fH during first half T3 in period T1 and serves as 5 kHz low-frequency voltage fL during the second half. During period T2, signal Com1 serves as low-frequency voltage fL during the first half, and serves as inverted low-frequency voltage fL during the second half. Common signal Com2 has a signal waveform in which periods T1 and T2 of signal Com1 are replaced with each other. T3 can be arbitrarily selected to obtain desired spectral characteristics. In this drive voltage waveform, T3 is selected to be 0.5 msec. Referring to Fig. 47, reference symbols Seg1 and Seg2 denote segment signals applied to segment electrodes 129a and 129b in synchronism with the common signals. Segment signal Seg1 has a waveform for turning on the shutter portions selected in first and second periods T1 and T2, and segment signal Seg2 has a waveform for turning off the shutter portions selected during first and second periods T1 and T2. Segment signal Seg1 serves as inverted high-frequency voltage $\overline{fH}$ of fH in the first halves of first and second periods T1 and T2 and serves as low-frequency voltage $\overline{fL}$ in the second halves thereof. Segment signal Seg2 serves as inverted low-frequency voltage fL of fL during the first halves of periods T1 and T2 and serves as low-frequency voltage fL during the second halves thereof. Referring to Fig. 47, reference symbol Seg1-Com1 denotes a synthesized waveform of segment signal Seg1 and common signal Com1. Seg2-Com2, a synthesized waveform of segment signal Seg2 and common signal Com2. Seg1-Com2, a synthesized waveform of segment signal Seg1 and common signal Com2. and Seg2-Com1, a synthesized waveform of segment signal Seg2 and common signal Com1.

During the print operation, shutter portions Sa constituted segment electrodes 129a and common electrode 130a are selected in response to the above signal during first period T1, and shutter portions Sb constituted by segment electrodes 129b and common electrode 130b are selected during second period T2. In this manner, the ON or OFF state can be selectively obtained. Light transmitted through shutter portions Sa and Sb is radiated on photosensitive drum 111, thereby forming a latent image thereon. Then, print processing onto recording paper sheet 115 is performed on the basis of the latent image formed on drum 111.

The driver circuit described above is arranged to select an application time of high-frequency signal fH during first and second periods T1 and T2 in accordance with the selection command signal supplied from the external circuit. Therefore, the application time of the high-frequency electric field is selected in accordance with the selected command signal, and the spectral characteristics of light transmitted through the shutter portions can be selected. In this case, if a halogen lamp is used as a light source, its spectral energy distribution has a peak value at the long wavelength side, as shown in Fig. 41. Therefore, application time T3 of high-frequency electric field fH is preferably set to be a relatively long time such as 0.5 msec or 0.75 msec. If photosensitive drum 111 comprises amorphous silicon, its spectral sensitivity has a peak value at the long wavelength side, as shown in Fig. 40. Therefore, the application time of high-frequency electric field fH is selected in the same manner as above. As is apparent from the above description, in the liquid crystal optical printer, when the halogen lamp whose spectral energy distribution has a peak value at the long wavelength side is used, an amorphous silicon photosensitive body whose spectral sensitivity has a peak value at the long wavelength side is adopted. The liquid crystal shutter is preferably driven in such a manner that the application time of high-frequency electric field fH is prolonged so that a peak value of spectral characteristics is present at the long wavelength side.

In this manner, the spectral characteristics of light transmitted through shutter portions Sa and Sb can coincide with the spectral intensity distribution of the light source and/or the spectral sensitivity of photosensitive drum 111. Therefore, the liquid crystal shutter of the present invention can have excellent response property and high light intensity. As a result, an electro-photographic printer capable of high-speed processing and obtaining sufficient contrast can be constituted.

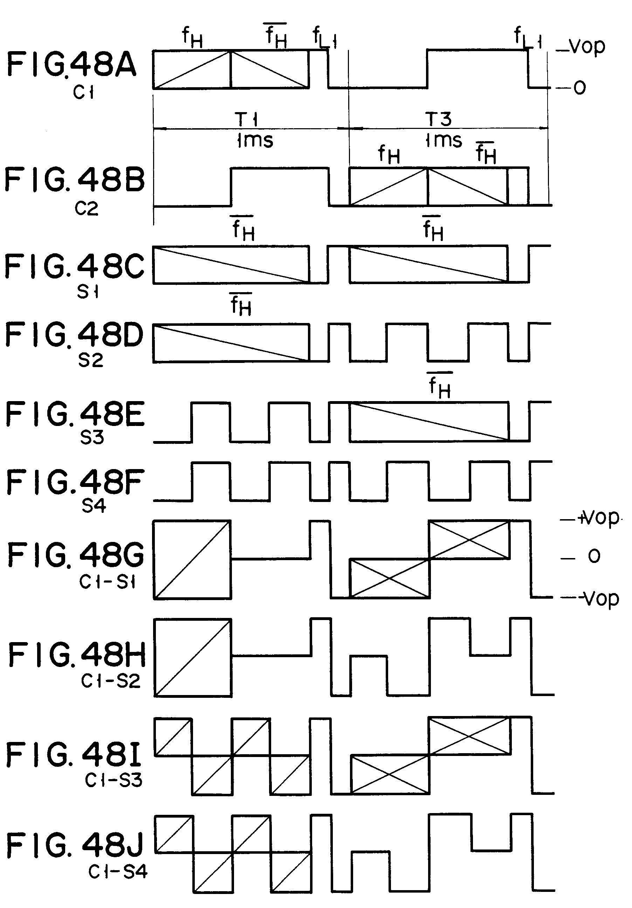

The liquid crystal optical element of the present invention can be time-divisionally driven at 1/2 duty in accordance with a drive signal shown in Fig. 48 in order to improve its operation characteristics. Referring to Fig. 48, reference symbols C1 and C2 denote common signals. and S1 to S4, segment signals. For micro shutters Sa and Sb, signal S1 corresponds to an ON-ON signal, signal S2 corresponds to an ON-OFF signal, and signal S3 corresponds to an OFF-OFF signal. One frame is 2 msec. High-frequency electric fields fH and fH have a frequency of 400 kHz, and their phases are shifted by half the period. Low-frequency electric field fL has a frequency of 5 kHz and a pulse width of 0.2 msec. Amplitude Vop of the above drive signals is 25 V.

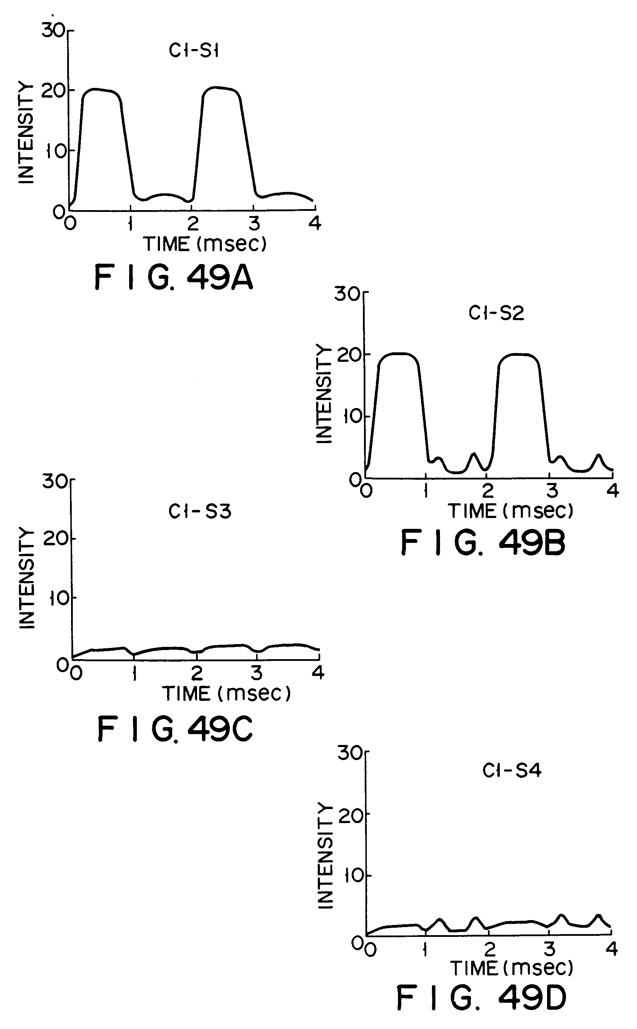

Figs. 49A to 49D show optical response characteristics at 50 ° C when liquid crystal shutter 220 is driven by the signals shown in Fig. 48. Fig. 49A shows a case when signal C1-S1 is applied. During a non-selection period, superimposed electric field fHL is applied except for fL. Fig. 49B shows characteristics upon application of signal C1-S2, and has a different signal waveform during the non-selection period. In the non-selection period of Fig. 49B, a waveform "0 - fL - 0" is repeated except for low-frequency electric field fL. Although brightness can be slightly improved during the non-electric field application period, it is much decreased while low-frequency electric field fL is applied. Therefore, the amount of light in Fig. 49B is the same as that in Fig. 49A. Figs. 49C and 49D show a case of selection period OFF, and superimposed electric field fHL is applied except for the application period of low-frequency electric field fL. The non-selection period still has a dark level as in Figs. 49A and 49B.

As can be seen from the optical response characteristics shown in Fig. 49, when the drive scheme shown in Fig. 48 is used, excellent shutter characteristics can be obtained at 1/2 duty.

**Claims**

1. A liquid crystal optical system including:
a light source for generating a light having a spectral intensity distribution; and
a liquid crystal optical device receiving the light from the light source, said liquid crystal optical device comprising:
a pair of substrates (125,126 in Fig 43) having electrodes on their opposing inner surfaces (129a,129b,130a,130b) such that said electrodes at least partially oppose each other;
alignment films (134,135) formed on the inner surfaces of said pair of substrates;
a liquid crystal material (128) exhibiting dielectric anisotropy which material is sealed between said pair of alignment films (134,135)so as to form a layer, and whose alignment state is controllable by electric fields (fH,fL,O) applied across said electrodes (129a,129b,130a,130b);
a pair of polarizing means (139,140) arranged on either sides of said liquid crystal material (128), the polarizing axes of said polarizing means (139,140) being arranged to be substantially perpendicular to each other; and
control means (211 to 219 in Fig. 46), connected to the electrodes (129a,129b,130a,130b), for applying voltages to the electrodes (129a,129b,130a,130b) to apply electric fields to the liquid crystal material (128), thereby controlling alignment states of the liquid crystal material and obtaining, in a first state of the liquid crystal molecules, an ON state wherein an incident light passes the liquid crystal device and, in a second state of the liquid crystal molecules differing from said first state and an OFF state wherein an incident light is sealed by the liquid crystal device,
**characterised in that**
said alignment films are subjected to an aligning treatment in directions defining an angle of 150 degrees to 180 degrees to each other;
that at least one polarizing axis of said polarizing means intersects one of the aligning treatment directions at an angle of about 35 degrees to 45 degrees; and
said control means are adapted to set (211 to 219) the liquid crystal material (128) in said first state wherein liquid crystal molecules of the liquid crystal material (128) are obliquely aligned to the substrates, to obtain the said ON state so that the product $\Delta nb.d$ of the birefringence $\Delta nb$ and the thickness d of the liquid crystal material (128) is substantially equal to an odd number multiple of 1/2 of a peak wavelength of the spectral intensity distribution of the light generated by the light source.

2. A liquid crystal optical system according to claim 1,
**characterised in that**
said liquid crystal material (128) is a liquid crystal compound which has a crossover frequency yielding a dielectric anisotropy of 0, and exhibits a dielectric dispersion phenomenon whose dielectric anisotropy becomes positive in a low-frequency electric field lower than the crossover frequency, and becomes negative in a high-frequency electric field higher than the crossover frequency, and
said control means (211 to 219) is adapted to control the birefringence $\Delta nb$ of said liquid crystal material (128) by controlling the time during which the high-frequency electrical field is applied to said liquid crystal material (128), in order to obtain a tilt angle of the liquid crystal molecules at which said liquid crystal optical device can be in the ON state.

3. A liquid crystal optical system according to one of claims 1 or 2, **characterised in that** a product of the birefringence and the thickness of the liquid crystal material (128) is substantially an integer multiple of the said peak wavelength in an initial aligning state wherein the control means applies no electric field to the liquid crystal material (128).

4. A liquid crystal optical system according to one of claims 1 to 3, **characterised in that** the axes of the liquid crystal molecules are arranged perpendicular to the substrates (125,126) in the second state.

5. A liquid crystal optical system according to one of claims 1 to 4, **characterised in that** the electric field applied to the liquid crystal optical device comprises of a low frequency electric field for obtaining an OFF state and a high frequency electric field for obtaining an ON state.

6. A liquid crystal optical printer comprising a liquid crystal optical system according to one of claims 1 to 5, wherein
said light source is used as a light source of the printer, and
said liquid crystal device is used as light shutters arranged in a matrix;
the printer further comprising:
a photosensitive drum (111);
optical control means (113,114) for controlling said optical shutters to radiate light onto said photosensitive drum (111), thereby forming a desired latent image on said photosensitive drum (111); and
developing means (113,118,119) for outputting the latent image;

## Patentansprüche

1. Ein optisches Flüssigkristallsystem mit:
einer Lichtquelle zum Erzeugen von Licht mit einer spektralen Intensitätsverteilung; und
einer optischen Flüssigkristallvorrichtung, die das Licht von der Lichtquelle empfängt, wobei die optische Flüssigkristallvorrichtung umfaßt:
ein Paar von Substraten (125, 126 in Fig. 43) mit Elektroden auf ihren gegenüberliegenden Oberflächen (129a, 129b, 130a, 130b) derart, daß die Elektroden sich wenigstens teilweise gegenüberliegen;
Ausrichtfilme (134, 135), die auf den inneren Oberflächen des Paars von Substraten ausgebildet sind;
ein Flüssigkristallmaterial (128), das eine dielektrische Anisotropie aufweist, wobei das Material zwischen dem Paar von Ausrichtfilmen (134, 135) dichtend eingeschlossen ist, um eine Schicht zu bilden, und dessen Ausrichtzustand durch zwischen den Elektroden (129a, 129b, 130a, 130b) angewendete elektrische Felder (fH, fL, O) steuerbar ist;
ein Paar von polarisierenden Vorrichtungen (139, 140), die zu beiden Seiten des Flüssigkristallmaterials (128) angeordnet sind, wobei die Polarisationsachsen der polarisierenden Vorrichtungen (139, 140) derart angeordnet sind, daß sie im wesentlichen zueinander senkrecht sind; und
eine Steuervorrichtung (211 - 219 in Fig. 46), die mit den Elektroden (129a, 129b, 130a, 130b) verbunden ist, um Spannungen an die Elektroden (129a, 129b, 130a, 130b) anzulegen, um elektrische Felder auf das Flüssigkristallmaterial (128) anzuwenden, wodurch die Ausrichtzustände des Flüssigkristallmaterials gesteuert werden und in einem ersten Zustand der Flüssigkristallmoleküle ein EIN-Zustand erhalten wird, bei dem eintreffendes Licht durch die Flüssigkristallvorrichtung hindurchtritt, und in einem zweiten Zustand der Flüssigkristallmoleküle, der von dem ersten Zustand abweicht, ein AUS-Zustand erhalten wird, bei dem eintreffendes Licht durch die Flüssigkristallvorrichtung abgeschirmt wird, **dadurch gekennzeichnet,** daß
die Ausrichtfilme einer Ausrichtbehandlung in Richtungen unterworfen werden, die zueinander einen Winkel von 150° bis 180° bestimmen;
daß wenigstens eine Polarisationschse der polarisierenden Vorrichtungen eine der Richtungen der Ausrichtbehandlungen unter einem Winkel von ungefähr 35° bis 45° schneidet; und
daß die Steuervorrichtungen (211 bis 219) geeignet angepaßt sind, das Flüssigkristallmaterial (128) in den ersten Zustand zu versetzen, bei dem die Flüssigkristallmoleküle des Flüssigkristallmaterials (128) schräg zu den Substraten ausgerichtet sind, um den EIN-Zustand zu erhalten, so daß das Produkt $\Delta nb.d$ aus der Doppelbrechung $\Delta nb$ und der Dicke d des Flüssigkristallmaterials (128) im wesentlichen gleich einem ungeradzahligen Vielfachen von einem Halben der Scheitelwertwellenlänge der spektralen Intensitätsverteilung des durch die Lichtquelle erzeugten Lichts ist.

2. Ein optisches Flüssigkristallsystem nach Anspruch 1, **dadurch gekennzeichnet,** daß das Flüssigkristallmaterial (128) ein Flüssigkristallverbundstoff ist, der eine Übergangsfrequenz aufweist, die zu einer dielektrischen Anisotropie von 0 führt, und der ein dielektrisches Dispersionsverhalten zeigt, bei dem die dielektrische Anisotropie bei einem elektrischen Frequenz mit Niederfrequenz, die niedriger als die Übergangsfrequenz ist, positiv wird und bei einem elektrischen Feld mit Hochfrequenz, die höher als die Übergangsfrequenz ist, negativ wird, und
daß die Steuervorrichtungen (211 bis 219) geeignet angepaßt sind, die Doppelbrechung $\Delta nb$ des Flüssigkristallmaterials (128) durch Steuern der Zeit, während der das elektrische Hochfrequenzfeld auf das Flüssigkristallmaterial (128) angewendet wird, zu steuern, um einen Kippwinkel der Flüssigkristallmoleküle, bei dem die optische Flüssigkristallvorrichtung in dem EIN-Zustand sein kann, zu erhalten.

3. Ein optisches Flüssigkristallsystem nach einem der Ansprüche 1 oder 2, **dadurch gekennzeichnet,** daß ein Produkt aus der Doppelbrechung und der Dicke des Flüssigkristallmaterials (128) im wesentlichen ein ganzzahliges Vielfaches der Scheitelwertwellenlänge in einem anfänglichen Ausrichtzustand ist, wobei die Steuervorrichtungen kein elektrisches Feld auf das Flüssigkristallmaterial (128) anwenden.

4. Ein optisches Flüssigkristallsystem nach einem der Ansprüche 1 bis 3, **dadurch gekennzeichnet,** daß in dem zweiten Zustand die Achsen der Flüssigkristallmoleküle senkrecht zu den Substraten (125, 126) angeordnet sind.

5. Ein optisches Flüssigkristallsystem nach einem der Ansprüche 1 bis 4, **dadurch gekennzeichnet,** daß das auf die optische Flüssigkristallvorrichtung angewendete elektrische Feld ein elektrisches Niederfrequenzfeld umfaßt zum Erhalten eines AUS-Zustands und ein elektrisches Hochfrequenzfeld zum Erhalten eines EIN-Zustands.

6. Ein optisches Flüssigkristallkopiergerät mit einem optischen Flüssigkristallsystem nach einem der Ansprüche 1 bis 5, wobei die Lichtquelle als eine Lichtquelle des Kopiergeräts verwendet wird, und die Flüssigkristallvorrichtung als in einer Matrix angeordnete Lichtverschlüsse verwendet wird; wobei das Kopiergerät weiter umfaßt: eine fotoempfindliche Trommel (111); eine optische Steuervorrichtung (113, 114) zum Steuern der optischen Verschlüsse, um Licht auf die fotoempfindliche Trommel (111) einzustrahlen, wodurch ein gewünschtes latentes Bild auf der fotoempfindlichen Trommel (111) gebildet wird; und eine Entwicklungsvorrichtung (113, 118, 119) zum Ausgeben des latenten Bildes.

## Revendications

1. Système optique à cristal liquide comportant :
    une source lumineuse servant à produire une lumière qui possède une certaine distribution d'intensité spectrale ; et
    un dispositif optique à cristal liquide recevant la lumière qui vient de la source lumineuse, ledit dispositif optique à cristal liquide comprenant :
    une paire de substrats (125, 126 sur la figure 43) possédant des électrodes sur leurs surfaces internes opposées (129a, 129b, 130a, 130b) de façon que lesdites électrodes soient en regard l'une de l'autre au moins partiellement;
    des pellicules d'alignement (134, 135) formées sur les surfaces internes de ladite paire de substrats;
    un matériau de cristal liquide (128) doté d'anisotropie diélectrique, lequel matériau est enfermé de façon étanche entre lesdites deux pellicules d'alignement (134, 135) de façon à former une couche, l'état d'alignement dudit matériau étant commandé par des champs électriques (fH, fL, O) appliqués entre lesdites électrodes (129a, 129b, 130a, 130b);
    une paire de moyens de polarisation (139,140) disposés sur l'un et l'autre côté dudit matériau de cristal liquide (128), les axes de polarisation desdits moyens de polarisation (139, 140) étant disposés de façon à être sensiblement perpendiculaires entre eux ; et
    un moyen de commande (211 à 219 sur la figure 46), connecté aux électrodes (129a, 129b, 130a, 130b) afin d'appliquer des tensions aux électrodes (129a, 129b, 130a, 130b) et ainsi appliquer des champs électriques au matériau de cristal liquide (128), de manière à commander les états d'alignement du matériau de cristal liquide et obtenir, dans un premier état des molécules du cristal liquide, un état activé dans lequel une lumière incidente traverse le dispositif à cristal liquide et, dans un deuxième état des molécules de cristal liquide qui diffère dudit premier état, un état non activé dans lequel une lumière incidente reste enfermée dans le dispositif à cristal liquide,
    caractérisé en ce que :
    lesdites pellicules d'alignement sont soumises à un traitement d'alignement dans des directions définissant entre elles un angle de 150° à 180°;
    au moins un axe de polarisation desdits moyens de polarisation coupe l'une des directions du traitement d'alignement suivant un angle d'environ 35° à 45°; et
    ledit moyen de commande (211 à 219) est destiné à placer le matériau à cristal liquide (128) dans

EP 0 251 231 B1

ledit premier état, dans lequel les molécules de cristal liquide du matériau de cristal liquide (128) sont alignées obliquement par aux substrats, pour qu'on obtienne ledit état activé, de sorte que le produit $\Delta nb.d$ de la biréfringence $\Delta nb$ et de l'épaisseur $\underline{d}$ du matériau de cristal liquide (128) soit sensiblement égal à un multiple impair de la moitié de la longueur d'onde de crête de la distribution d'intensité spectrale de la lumière créée par la source lumineuse.

2. Système optique à cristal liquide selon la revendication 1,
caractérisé en ce que :
ledit matériau de cristal liquide (128) est un composé de cristal liquide qui possède une fréquence de transition donnant une anisotropie diélectrique de valeur 0, et présente un phénomène de dispersion diélectrique dont l'anisotropie diélectrique devient positive dans un champ électrique de basse fréquence qui est inférieure à la fréquence de transition et devient négative dans un champ électrique de haute fréquence qui est supérieure à la fréquence de transition, et
ledit moyen de commande (211 à 219) est destiné à commander la biréfringence $\Delta nb$ dudit matériau de cristal liquide (128) par commande du temps pendant lequel le champ électrique de haute fréquence est appliqué audit matériau de cristal liquide (128), afin qu'on obtienne un angle d'inclinaison des molécules de cristal liquide pour lequel ledit dispositif optique à cristal liquide peut être dans l'état activé.

3. Système optique à cristal liquide selon l'une quelconque des revendications 1 et 2, caractérisé en ce que le produit de la biréfringence et de l'épaisseur du matériau de cristal liquide (128) est sensiblement un multiple entier de ladite longueur d'onde de crête dans un état d'alignement initial où le moyen de commande n'applique aucun champ électrique au matériau de cristal liquide (128).

4. Système optique à cristal liquide selon l'une quelconque des revendications 1 à 3, caractérisé en ce que les axes des molécules de cristal liquide sont disposés perpendiculairement aux substrats (125,126) dans le deuxième état.

5. Système optique à cristal liquide selon l'une quelconque des revendications 1 à 4, caractérisé en ce que le champ électrique appliqué au dispositif optique à cristal liquide comprend un champ électrique de basse fréquence permettant d'obtenir un état non activé et un champ électrique de haute fréquence permettant d'obtenir un état activé.

6. Imprimante optique à cristal liquide comprenant un système optique à cristal liquide selon l'une quelconque des revendications 1 à 5, où ladite source lumineuse est utilisée comme source lumineuse de l'imprimante, et
ledit dispositif à cristal liquide est utilisé au titre d'obturateurs de lumière placés suivant une matrice;
l'imprimante comprenant en outre :
un tambour photosensible (111);
un moyen de commande optique (113, 114) servant à commander lesdits obturateurs optiques de façon qu'ils envoient de la lumière sur ledit tambour photosensible (111), si bien qu'il est formé une image latente voulue sur ledit tambour photosensible (111); et
un moyen de développement (113, 118, 119) servant à produire l'image latente à la sortie.

33

16

12
11
13
14

15

14
13
11
12

F I G. 1

22
21
23

F I G. 2

F I G. 3

F I G. 4A

F I G. 4B

F I G. 5A

F I G. 5B

F I G. 6

F I G. 7

F I G. 8

F I G. 9

F I G. 10A

Vop
0
Vop

fH | fL | fH | fL

INTENSITY

20

10

55°C

0

0    1    2    3    4

TIME(msec)

F I G. 10B

20

INTENSITY

10

35°C

0

0    1    2    3    4

TIME(msec)

F I G. 11

τON   τOFF

100%
90%

10%
0%

SHUTTER
OPERATION

ON | OFF | ON | OFF

T1 | T2

F I G. 12

EP 0 251 231 B1

F I G. 13A

F I G. 13B

T3

fH | O | fL | fH | O | fL

T3 = 0.5 msec

INTENSITY

55°C

20

10

0    1    2    3    4

TIME (msec)

# F I G. 14A

INTENSITY

35°C

20

10

0    1    2    3    4

TIME (msec)

# F I G. 14B

F I G. 15A

F I G. 15B

F I G. 16

F I G. 17

F I G. 18

F I G. 19

45

F I G. 20

$\lambda$ = 550 nm

n// = 1.646
n⊥ = 1.499
CELLGAP
= 4.49

F I G. 21

F I G. 22

F I G. 23

47

F I G. 24A

F I G. 24B

F I G. 24C

48

F I G. 25A

F I G. 25B

F I G. 25C

49

F I G. 26A

F I G. 26B

F I G. 26C

F I G. 27

F I G. 28

F I G. 29

F I G. 30

F I G. 31

F I G. 32

53

(1) $\Delta nb \cdot d = 0.543$
(2) $\Delta nb \cdot d = 1.087$
(3) $\Delta nb \cdot d = 1.629$

F I G. 33

F I G. 34A

F I G. 34B

F I G. 34C

F I G. 34D

F I G. 35

F I G. 36

R (Red): β = 45°
G (Green): 40°
B (Blue): 35°
O (Orange): 30°

CELL THICKNESS: 4.15μm

F I G. 37

F I G. 38

F I G. 39

F I G. 40

F I G. 41

F I G. 42

F I G. 43

F I G. 45

F I G. 44

F I G. 46

EP 0 251 231 B1

FIG.47A COM·1

FIG.47B COM 2

FIG.47C SEG1(ON,ON)

FIG.47D SEG2(OFF,OFF)

FIG.47E SEG1-COM1

FIG.47F SEG2-COM2

FIG.47G SEG1-COM2

FIG.47H SEG2-COM1

FIG.48A
C1

FIG.48B
C2

FIG.48C
S1

FIG.48D
S2

FIG.48E
S3

FIG.48F
S4

FIG.48G
C1-S1

FIG.48H
C1-S2

FIG.48I
C1-S3

FIG.48J
C1-S4

F I G. 49A

F I G. 49B

F I G. 49C

F I G. 49D